# EUROPÄISCHE PATENTSCHRIFT

(11) **EP 4 031 329 B1**
(45) Veröffentlichungstag und Bekanntmachung des Hinweises auf die Patenterteilung: **01.05.2024**
(21) Anmeldenummer: 20767996.0
(22) Anmeldetag: 02.09.2020
(51) Int. Cl.: B25B 25/00, B25B 27/10

(54) **PRESSKRAFTÜBERSETZER, PRESSWERKZEUG, SYSTEM UND VERFAHREN ZUR HERSTELLUNG EINER DICHTEN VERBINDUNG EINES PRESSVERBINDERS MIT EINEM WERKSTÜCK**
PRESSING-FORCE TRANSMISSION MEANS, PRESSING TOOL, SYSTEM AND METHOD FOR PRODUCING A TIGHT CONNECTION BETWEEN A PRESS-CONNECTOR AND A WORKPIECE
CONVERTISSEUR DE FORCE DE PRESSION, OUTIL DE COMPRESSION, SYSTÈME ET PROCÉDÉ POUR ÉTABLIR UNE LIAISON ÉTANCHE ENTRE UN MANCHON À COMPRIMER ET UNE PIÈCE

(30) Priorität: 16.09.2019 DE 102019124845
(43) Veröffentlichungstag der Anmeldung: 27.07.2022
(73) Patentinhaber: Viega Technology GmbH & Co. KG, 57439 Attendorn (DE)
(72) Erfinder: ROSENTHAL, Jörg, 51580 Reichshof-Eckenhagen (DE); SCHELLENBERG, Nico, 57462 Olpe (DE); GRÜNKEMEIER, Uwe, 41564 Kaarst (DE)
(74) Vertreter: Cohausz & Florack
(86) Internationale Anmeldenummer: PCT/EP2020/074394
(87) Internationale Veröffentlichungsnummer: WO 2021/052751

(56) Entgegenhaltungen:
- EP-A2- 2 186 606
- DE-U1-202009 015 515
- US-A1- 2017 087 709
- US-B1- 6 405 411

## Beschreibung

Die Erfindung betrifft ein System zur Herstellung einer dichten Verbindung eines Pressverbinders mit einem Werkstück, insbesondere mit einem Rohr, vorzugsweise mit einem Kunststoffrohr, mit einem Presswerkzeug zum Verpressen eines Pressverbinders und mit einem Druckwerkzeug zum Antreiben des Presswerkzeugs, wobei das Druckwerkzeug dazu eingerichtet ist, an einem Druckerzeugungsort einen hydraulischen Druck auszugeben, wobei das Presswerkzeug dazu eingerichtet ist, an einem Verpressungsort einen hydraulischen Druck aufzunehmen und einen Pressverbinder entsprechend zu verpressen und wobei das Druckwerkzeug und das Presswerkzeug über eine hydraulische Druckübertragungsverbindung verbunden sind, wobei der Druckerzeugungsort und der Verpressungsort voneinander entfernt liegen.. Die Erfindung betrifft weiterhin ein Presswerkzeug zum Verpressen eines Pressverbinders und ein Verfahren zur Herstellung einer dichten Verbindung eines Pressverbinders mit einem Werkstück.

Mehrere Verfahren sind bekannt, um Versorgungsleitungen zu verbinden. Beispiele hierfür sind Spiegelschweißen, Verbinden über eine Gewindeverbindung und einen Gewindeverbinder, Verbinden mithilfe von Elektroschweißmuffen und Verbinden durch einen Gewinde-Pressverbinder.

Beim Spiegelschweißen wird üblicherweise die Schnittstelle zwischen zwei zu verbindenden Werkstücken aufwendig vorbereitet. Hierzu wird die äußere Schicht eines zu verbindenden aus Polyethylen (PE) bestehenden Rohrendes abgeschält, um eine vermeintliche Oxidierung einer Außenschicht des Rohrs zu entfernen. Danach werden eine Planfläche am Kopf und die abgeschälte Fläche mit einem alkoholhaltigen PE-Reiniger abgewaschen. Erst danach kann die Verbindung durch das Spiegelschweißgerät erzeugt werden. Beim Spiegelschweißen wird ein Heizelement (Spiegel) an den Planflächen der zu verbindenden Rohrenden aufgesetzt. Durch die Erwärmung des Heizelements plastifiziert der Kunststoff der zu verbindenden Rohrenden. Mithilfe eines Fügedrucks werden die Rohrenden gegeneinander gedrückt, so dass im Ergebnis die Rohrenden verschweißt werden.

Beim Ausüben des Fügedrucks können mehrere Probleme auftreten. Zum einen muss die Planfläche rechtwinklig, glatt und sauber erzeugt werden. Zum anderen dürfen die voreinander liegenden Rohre keine Winkelfehler aufweisen. Gleichzeitig soll der Versatz der Rohrenden kleiner als etwa 10% der Rohrwanddicke sein. Gegebenenfalls sind die Wanddicken im Schweißnahtbereich spangebend anzugleichen. Ein weiterer Nachteil des Spiegelschweißens ist der hohe Zeitaufwand, die ein Angleichen der Rohrenden in Anspruch nimmt. Beim Angleichen wird erwärmt, umgestellt, gefügt und abgekühlt, wobei jeder Schritt eine Zeitverlängerung des gesamten Verfahrens bedeutet. Außerdem sind häufig für das Durchführen eines qualitativen hochwertigen Spiegelschweißens besondere Schweißqualifikationen des Anwenders gefragt.

Beim Verwenden einer Gewindeverbindung mit Gewindeverbinder wird auf ein zu verbindendes Rohrende mittels Gewindeschneidvorrichtung ein Gewinde auf die Außenfläche geschnitten, das dann mit einem Gewindeverbinder verbunden wird. Nachteile bei diesem Verfahren sind zum einen der hohe Zeitaufwand durch den Schneidvorgang und zum anderen das komplexe Verbinden mit dem Verbinder. Außerdem wird durch die Rotationsbewegung, die eine Verbindung durch Gewinde herbeiführt, häufig mehr Platz gebraucht.

Beim Verwenden von Elektroschweißmuffen wird wie beim Spiegelschweißen die Außenhaut eines zu verbindenden PE-Rohrs abgeschält und mit einem PE-Reiniger abgewaschen. Anders als beim Spiegelschweißen wird bei diesem Verfahren ein Formstück mit integriertem Schweißbund auf das Rohrende geschoben. Nachdem das Formstück angesetzt wurde, sind die Auswirkungen vermeintlicher äußerer Kräfte auf die Muffe zu vermeiden. Aus diesem Grund wird oftmals eine Fixiervorrichtung eingesetzt. Nachdem alles in Position gebracht worden ist, wird ein Schweißgerät mittels Kabel angeschlossen und der Schweißprozess kann beginnen. Wie beim Spiegelschweißen gibt es auch bei den Elektroschweißmuffen eine Aufwärm-, Halte- und Abkühlzeit. Im Unterschied zum Spiegelschweißen entfällt allerdings das Andrücken der beiden Planflächen durch Ausüben einer Fügekraft gegeneinander.

Dies hat den Vorteil, dass das Entstehen einer Wulst an der Außen- oder Innenseite des PE-Rohrs vermieden wird.

Beim Verbinden durch einen Gewinde-Pressverbinder wird ein Pressverbinder mit einem Formteil (T-Stück, Muffe usw.), der mindestens eine Anschlussstelle aufweist, und mit einer Nuss, die ein Dichtelement je Anschlussstelle aufweist, verbunden. Hierzu wird die Nuss zunächst auf ein zu verbindende PE-Rohr geschoben. Dann wird das Rohr samt Nuss in das Formteil geschoben und mit der Nuss verschraubt. Während die Nuss auf das Formteil geschraubt wird, drückt sich das jeweilige Dichtelement über einen Konus auf die Rohroberfläche und dichtet somit die Verbindung ab. Problematisch bei dieser Verbindung ist, dass die bekannten Gewindepressverbinder bis zu einer bestimmten Größe bzw. Durchmesser verfügbar sind, so dass diese zur Verbindung eines Rohrendes mit einem größeren Durchmesser nicht einsetzbar sind. Darüber hinaus führt diese Art der Verbindung zu höheren Kosten, insbesondere aufgrund des Verbinders, im Vergleich zum Spiegelschweißen oder im Vergleich zum Einsatz von Elektroschweißmuffen.

Häufig werden Versorgungsleitungen in den Erdboden eingegraben, so dass deren Zusammenbauen bzw. das Verbinden von mehreren Leitungsabschnitten in tief gelegenen Stellen erfolgen muss. Die Einbautiefe für große Versorgungsleitungen beträgt im Regelfall ca. 1 m. Üblicherweise steht der Anwender in der Grube, um mehrere Abschnitte der Versorgungsleitung zu verbinden, so dass das Verbinden unter beengten Bedingungen erfolgt.

Die US 2017/0087709 A1 offenbart ein Presswerkzeug zum Verpressen von Verbindungen bei Rohrleitungen, mit einem über eine Leitung mit einem elektrischen Motor verbundenen Presswerkzeug.

Aus der DE 21 18 782 A ist ein Gerät zum Gewährleisten eines über den Umfang eines Rohres homogenen Verbindens von Rohren bekannt, das mit einer manuellen, tragbaren Pumpe eingesetzt wird.

Die DE 44 46 502 A1 offenbart ein Handwerkzeug mit einem eingebauten Hydraulikantrieb, das über einen Druckschlauch mit einer elektrisch angetriebenen Hydraulikpumpe angeschlossen ist.

Die EP 2 186 606 A2 gibt eine Vorsatzvorrichtung für eine Rohrpressmaschine an, wobei ein Handstück mit Pressbacken über eine flexible Leitung mit der Rohrpressmaschine verbunden ist und zeigt somit ein System gemäß dem Oberbegriff des Anspruchs 1 sowie ein Presswerkzeug gemäß dem Oberbegriff des Anspruchs 7 sowie ein entsprechendes Verfahren.

Daher liegt der vorliegenden Erfindung die Aufgabe zu Grunde, das Verbinden von Werkstücken, beispielsweise von Kunststoffrohrenden, zu vereinfachen sowie kostengünstiger und zeitsparender zu gestalten. Insbesondere liegt der vorliegenden Erfindung die Aufgabe zu Grunde, Werkzeuge und ein Verfahren zur Verfügung zu stellen, die ein Verbinden von Werkstücken mit großem Durchmesser an schwierig zugänglichen Stellen vereinfachen.

Diese Aufgabe wird mit einem System der eingangs genannten Art gelöst, das dadurch gekennzeichnet ist, dass das Presswerkzeug mindestens zwei gegenüberliegende Pressabschnitte mit einem variablen Abstand zueinander und ein Vorspannelement aufweist, dass das Presswerkzeug für das Annehmen von mindestens drei Zuständen eingerichtet ist, wobei in einem ersten Zustand das Vorspannelement angespannt ist und die Pressabschnitte beabstandet zueinander angeordnet sind, wobei in einem zweiten Zustand die Pressabschnitte durch Entspannen des Vorspannelements in Eingriff mit einem Pressverbinder angespannt sind und wobei in einem dritten Zustand die Pressabschnitte eine Hubkraft in Richtung zu einander auf den Pressverbinder ausüben, und dass in dem zweiten Zustand der Pressverbinder verdrehsicher mit einem zu verbindenden Werkstück verbunden ist Durch das erfindungsgemäße System kann ein Verpressen durch das Presswerkzeug an schwierig zugänglichen Orten platzsparend erfolgen und die Bedienung bzw. das Antreiben des Presswerkzeugs durch das Druckwerkzeug aus einem nutzerfreundlicheren, praktischeren und einfacher zugänglichen Ort erfolgen. So kann sich beispielsweise beim Verpressen eines Pressverbinders in einer Grube während des Verpressens ein Anwender außerhalb der Grube aufhalten.

Beim Verpressen eines Pressverbinders mithilfe des Systems sind ein geringer Achsversatz von zu verbindenden Rohren oder eine Abweichung deren Konzentrizität weniger problematisch als zum Beispiel bei einem Verbinden durch Schweißen.

Außerdem genügt für den Einsatz des Systems eine im Vergleich zu bekannten Verbindungsverfahren einfache und kostengünstige Einweisung eines Benutzers.

Bei dem Werkstück kann es sich um einen Abschnitt einer Versorgungs- oder Entsorgungsleitung handeln. Insbesondere kann das System zum Verbinden von Rohrenden eingesetzt werden, wobei der jeweilige Durchmesser der Rohre nach Normen für Leitungen für beispielsweise Wohn- und/oder Gewerbebauwesen ausgebildet ist.

Das System weist ein Druckwerkzeug zum Antreiben des Presswerkzeugs auf. Das Druckwerkzeug ist vorzugsweise als mobile Einheit, beispielsweise als tragbare Einheit, als mit Rollen ausgestattete Einheit oder als Handwerkzeug ausgebildet. Alternativ oder zusätzlich kann das Druckwerkzeug zum Antreiben mehrerer weiterer Werkzeuge oder Presswerkzeuge ausgebildet sein. Hierzu weist das Druckwerkzeug vorzugsweise eine Druckkammer und einen Pumpstößel zum Zusammendrücken eines Mediums wie zum Beispiel Öl auf. Vorzugsweise ist der Druckerzeugungsort entsprechend der Ort, an dem sich das Druckwerkzeug befindet, wenn dieses in der Lage ist, einen hydraulischen Druck auszugeben.

Als Übersetzungsmittel zum Übersetzen einer aufgenommenen Hubkraft in einen hydraulischen Druck sind vorzugsweise eine Kammer und ein Pumpstößel vorgesehen, wobei der Pumpstößel durch eine Hubkraft aus einem Presshandwerkzeug angetrieben werden kann und somit ein in der Kammer angeordnetes Medium, beispielsweise Öl, pressen kann.

Das Presswerkzeug ist zum Verpressen eines Pressverbinders eingerichtet. Vorzugsweise weist das Presswerkzeug mindestens einen Pressabschnitt auf, wobei der mindestens eine Pressabschnitt an die Formgebung eines zu verpressenden Pressverbinders angepasst ist. Vorzugsweise kann der mindestens eine Pressabschnitt gegebenenfalls ausgetauscht werden, um an einen bestimmten Pressverbindertyp oder -größe angepasst zu werden. Das Presswerkzeug kann alternativ oder zusätzlich so geregelt werden, dass ein Pressabstand an einen zu verpressenden Pressverbinder angepasst werden kann. Vorzugsweise ist das Presswerkzeug zum Verpressen eines Pressverbinders vorgesehen, der in Abhängigkeit eines Rohrdurchmessers ausgewählt wird.

Weiterhin ist das Presswerkzeug dazu eingerichtet, an einem Verpressungsort auf Basis eines hydraulischen Drucks einen Pressverbinder zu verpressen. Als Verpressungsort wird der Ort verstanden, an dem das Presswerkzeug einen Pressverbinder verpresst.

Das Druckwerkzeug und das Presswerkzeug sind über eine hydraulische Druckübertragungsverbindung verbunden, die zum Übertragen eines hydraulischen Drucks vom Druckerzeugungsort zum Verpressungsort eingerichtet ist. Das Druckwerkzeug übergibt den hydraulischen Druck an die Druckübertragungsverbindung, die diesen an das Presswerkzeug überträgt, wobei der so übertragene Druck zum Antrieb des Presswerkzeugs zum Verpressen eines Pressverbinders dient. Vorzugsweise ist der Durchmesser der Druckübertragungsverbindung in Abhängigkeit von dem Durchmesser der jeweiligen Verbindungsstücke bestimmt, so dass beim Leiten eines Mediums wie zum Beispiel Öl der Druckverlust möglichst gering gehalten wird.

Die Entfernung zwischen dem Druckerzeugungsort und dem Verpressungsort entspricht vorzugsweise einem Positionsunterschied in Höhe und/oder horizontalem Abstand.

Als Pressverbinder kann ein Rohrverbinder bzw. Fitting zum dichten Verbinden an ein Rohrende eingesetzt werden, der einen Grundkörper mit einer Aufnahme für ein Rohrende aufweist, wobei der Grundkörper entlang des Umfangs der Aufnahme mindestens zwei Schalenelemente aufweist, wobei die Schalenelemente an den umfangsseitigen Enden Verbindungsabschnitte aufweisen und wobei Verbindungsmittel vorgesehen sind, welche für eine Verbindung der Schalenelemente an jeweils einander zugeordneten Verbindungsabschnitten eingerichtet sind. Weiterhin kann der Pressverbinder mindestens zwei einander zugeordnete Verbindungsabschnitte mit einem profilierten Ansatzbereich zur Verpressung mit einem Presswerkzeug aufweisen, so dass die Schalenelemente in einen verpressten Zustand gebracht werden können. Ferner kann das Verbindungsmittel für die Verbindungsabschnitte mit dem Ansatzbereich dafür eingerichtet sein, die Schalenelemente im verpressten Zustand zu fixieren.

Vorzugsweise ist an der Innenwand des Pressverbinders mindestens ein Dichtungselement vorgesehen, um eine Verbindung zwischen dem Pressverbinder und einem zu verbindenden Werkstück abzudichten. Als Dichtungselement kann ein O-Ring eingesetzt werden. Zum Verbinden von zwei Rohrenden weist der Pressverbinder vorzugsweise zwei O-Ringe auf, die jeweils eine Verbindung des Pressverbinders mit einem Rohrende abdichten.

Insbesondere kann der Pressverbinder für ein einseitiges Verpressen oder für ein mehrseitiges Verpressen ausgebildet sein. Bei einem mehrseitigen Verpressen sind vorzugsweise mindestens zwei außenumfängliche Abschnitte jeweils als Presssitz ausgebildet. Als Presssitz kann auch mindestens ein Abschnitt einer Außenwand des Pressverbinders ausgebildet sein.

Bei einer ersten Ausführungsform des Systems ist die Druckübertragungsverbindung zumindest teilweise aus einem nachgiebigen Material ausgebildet. Dadurch kann der Druck zum Antrieb des Presswerkzeugs in einfacher Weise an einer vom Einsatzort des Presswerkzeugs abgelegenen Position erzeugt werden. Insbesondere kann somit die Position des Druckwerkzeugs bzw. der Druckerzeugungsort flexibler verlegt und das System bzw. dessen Verwendung nutzerfreundlicher ausgestaltet werden.

Als nachgiebige Materialien können beispielsweise Verbundwerkstoffe mit einer Kernschicht aus geflochtenen Fasern und mit einer Ummantelung aus Kunststoff oder mit Fasern verstärkte Kunststoffe eingesetzt werden. Vorzugsweise erlaubt die Druckübertragungsverbindung eine Bewegung des Druckwerkzeugs relativ zum Presswerkzeug.

Bei einer weiteren Ausführungsform des Systems weist die Druckübertragungsverbindung einen Hydraulikschlauch auf und der Hydraulikschlauch ist mit dem Druckwerkzeug und mit dem Presswerkzeug verbunden, insbesondere jeweils über eine Flat-Face-Verbindung. Durch Einsatz von Hydraulikschläuchen sowie von Flat-Face-Verbindungen kann das System kostengünstig und einfach ausgestaltet werden. Darüber hinaus sind Flat-Face-Verbindungen einfach zu handhaben.

Bei einer weiteren Ausführungsform des Systems ist das Druckwerkzeug als Handwerkzeug mit einem Presshandwerkzeug und mit einem Presskraftübersetzer ausgebildet, wobei das Presshandwerkzeug dazu eingerichtet ist, eine Hubkraft zu erzeugen und an dem Presskraftübersetzer zu übertragen, und wobei der Presskraftübersetzer dazu eingerichtet ist, eine aus dem Presshandwerkzeug übertragene Hubkraft in einen hydraulischen Druck zu übersetzen und auszugeben. Durch die Ausbildung des Druckwerkzeugs als Handwerkzeug kann das Druckwerkzeug einfach bedient werden, insbesondere im Vergleich zu bekannten Schweißverfahren.

Das Presshandwerkzeug kann ein manuelles Betätigungselement und einen Stößel aufweisen, wobei eine Betätigung des Betätigungselements eine Bewegung des Stößels herbeiführt oder steuert. Die Bewegung des Stößels erzeugt dann eine Hubkraft. Die Bewegung des Stößels kann elektrisch betrieben werden, insbesondere durch Akkubetrieb. Das Presshandwerkzeug kann als Pressgun oder als tragbare, manuell betätigbare Vorrichtung ausgebildet sein. Vorzugsweise sind das Presshandwerkzeug und der Presskraftübersetzer lösbar miteinander verbunden, so dass dieser einfach zu transportieren, verstauen oder ersetzen sind.

Als Hubkraft wird im Rahmen der vorliegenden Erfindung die Kraft verstanden, die einen Hub bzw. eine Bewegung auf gerader Strecke verursacht oder herbeiführt.

Bei einer weiteren Ausführungsform des Systems ist das Presswerkzeug dazu eingerichtet, einen durch die Druckübertragungsverbindung übertragenen Druck in eine Hubkraft zu übersetzen, und einen Pressverbinder durch Ausüben der Hubkraft zu verpressen. Somit kann das Presswerkzeug auf einfache Weise durch Hydraulik angetrieben werden.

Das Presswerkzeug weist mindestens zwei gegenüberliegende Pressabschnitte mit einem variablen Abstand zueinander auf und ein Vorspannelement auf und das Presswerkzeug ist für das Annehmen von mindestens drei Zuständen eingerichtet. In einem ersten Zustand ist das Vorspannelement angespannt und die Pressabschnitte sind beabstandet zueinander angeordnet sind, wobei in einem zweiten Zustand die Pressabschnitte durch Entspannen des Vorspannelements in Eingriff mit einem Pressverbinder angespannt sind. In einem dritten Zustand üben die Pressabschnitte eine Hubkraft in Richtung zueinander auf den Pressverbinder aus.

Im Rahmen der vorliegenden Erfindung wurde erkannt, dass das Presswerkzeug zunächst am Pressverbinder positioniert und dann verpresst werden kann. Insbesondere kann durch die Kraft aus dem Entspannen des Vorspannelements das Presswerkzeug auf dem Pressverbinder in Eingriff gehalten werden, bevor ein Verpressen erfolgt. Durch Positionieren des Presswerkzeugs im Vorfeld kann kontrolliert werden, dass die Hubkraft später bestimmungsgemäß bzw. an der richtigen Stelle ausgeübt wird und somit die Ergebnisaussichten des Verpressens verbessert werden. Darüber hinaus wird durch ein Vorspannen des Presswerkzeugs die Nutzerfreundlichkeit des Systems gesteigert.

Vorzugsweise sind die Pressabschnitte axial in Richtung zueinander oder in Richtung weg voneinander beweglich, wobei deren Bewegung das Ausüben einer Hubkraft ermöglicht. Dabei kann der variable Abstand der Pressabschnitte zueinander dem momentanen Abstand zwischen den nächstliegenden Punkten der jeweiligen Pressabschnitte entsprechen. Die Pressabschnitte können eine Formgebung aufweisen, die der Formgebung eines Pressverbinders oder zumindest eines Teils davon, insbesondere von Presssitzen entspricht. Dabei können die Pressabschnitte als Druckstücke, die dann ein Druckstückpaar bilden, ausgebildet sein. Als Druckstücke können bolzenartige Elemente verwendet werden.

Als Vorspannelement kann eine Druckfeder oder elastisches Element mit einer vorgegebenen Federkonstante vorgesehen sein. Vorzugsweise ist das Vorspannelement mit mindestens einem ersten Pressabschnitt verbunden und mindestens ein zweiter Pressabschnitt ist gegenüber dem Grundkörper des Presswerkzeugs fest angebracht. So kann beim Vorspannen des Vorspannelements der erste Pressabschnitt in Richtung weg vom zweiten Pressabschnitt und beim Entspannen des Vorspannelements in Richtung zum zweiten Pressabschnitt bewegt werden und somit ein Pressverbinder gegen den zweiten Pressabschnitt drücken.

Somit ist in dem ersten Zustand und in dem zweiten Zustand noch keine dichte Verbindung erstellt worden. Erst im dritten Zustand oder nach Erreichen des dritten Zustands ist eine dichte Verbindung mit dem zu verbindenden Werkstück erstellt. So kann anhand der Zustände des Presswerkzeugs überprüft werden, ob ein Verpressen bereits erfolgt ist oder gegebenenfalls noch durchgeführt werden muss, um eine dichte Verbindung zu erstellen.

In dem zweiten Zustand ist der Pressverbinder verdrehsicher mit einem zu verbindenden Werkstück verbunden. Entsprechend kann der Pressverbinder so positioniert werden, dass beim Verpressen in der dritten Position die Hubkraft sicher in einer bestimmungsgemäßen Richtung ausgeübt und somit der Pressverbinder bis zum Erreichen einer dichten Verbindung verpresst werden kann.

Vorzugsweise weist der Pressverbinder einen Schneidring auf, der durch Vorspannen bzw. durch Entspannen des Vorspannelements des Presswerkzeugs in die Außenfläche eines zu verbindenden Werkstücks eindringt. Beispielsweise kann der Schneidring Metallzähne aufweisen, die in der zweiten Position in dem Mantel eines PE-Rohrendes eingreifen.

Nachdem das Presswerkzeug den dritten Zustand angenommen hat und ausreichend Hubkraft auf einem zu verpressenden Pressverbinder ausgeübt worden ist, kann ein Sicherheitselement am Pressverbinder angebracht werden. Dadurch kann ein Verbleiben des Pressverbinders in einem verpressten Zustand sichergestellt werden. Vorzugsweise sind der Pressverbinder und das Presswerkzeug derart ausgebildet, dass im dritten Zustand des Presswerkzeugs das Sicherheitselement ohne Verstellen des Presswerkzeugs angebracht werden kann. Beispielsweise kann ein Sicherheitselement an dem Presswerkzeug axial vorbei geschoben werden.

Bei einer weiteren Ausführungsform des Systems ist das Druckwerkzeug dazu eingerichtet, beim Erreichen eines Grenzwerts für den variablen Abstand der Pressabschnitte des Presswerkzeugs zueinander abzuschalten. Dadurch kann vermieden werden, dass auf einen zu verpressenden Pressverbinder zu viel Kraft ausgeübt wird und somit eine Zerstörung des Pressverbinders bzw. einer zu erstellenden Verbindung vermieden werden.

Vorzugsweise ist für einen zu verpressenden Pressverbinder ein Abstand vorgegeben, der einem bestimmungsgemäßen verpressten Zustand des Pressverbinders entspricht. Alternativ oder zusätzlich kann der Grenzwert für das Presswerkzeug einer auf einen Pressverbinder auszuübenden maximalen Hubkraft oder einem maximalen Betriebsdruck in dem Druckwerkzeug entsprechen.

Das Druckwerkzeug kann abschalten, indem eine Kopplung zwischen einem Presshandwerkzeug und einem Presskraftübersetzer getrennt wird. Das Abschalten erfolgt vorzugsweise durch eine interne Steuerung (Druckabschaltung) des Presshandwerkzeugs.. Weiterhin ist der Durchmesser des Pumpstößels im Presskraftübersetzer derart ausgelegt, dass der erzeugte hydraulische Betriebsdruck im System bei einem vorbestimmten Betriebsdruckwert begrenzt ist. Beispielsweise bei Verwendung eines Presshandwerkzeugs in Form einer für 32 kN ausgelegte Pressgun, schaltet die Pressgun beim Erreichen eines Drucks von 32 kN auf dem Pumpstößel ab. Alternativ oder zusätzlich kann eine Druckbegrenzung und somit ein "Überpressen" eines Pressverbinders vermieden werden, indem eine maximale Anzahl an auf dem Pumpstößel auszuübenden Hüben vorgegeben ist.

Weiterhin kann das Druckwerkzeug ein Anzeigemittel aufweisen, das zum Anzeigen eines Abschaltens eingerichtet ist. Dadurch kann einem Anwender signalisiert werden, dass ausreichend Hubkraft auf eine Pressverbinder ausgeübt wurde und dass der Pressverbinder somit verpresst ist.

Ferner kann ein Presskraftübersetzer zum Übersetzen einer Hubkraft in einen hydraulischen Druck, insbesondere für eine Verwendung in einem System zur Herstellung einer dichten Verbindung eines Pressverbinders mit einem Werkstück, insbesondere mit einem Rohr, vorzugsweise mit einem Kunststoffrohr, mit einem Gehäuse, mit einem Verbindungsabschnitt zum Aufnehmen einer Hubkraft, mit einem Verbindungselement zum Ausgeben eines hydraulischen Drucks und mit Übersetzungsmitteln zum Übersetzen einer aufgenommenen Hubkraft in einen hydraulischen Druck, vorgesehen sein, der Verbindungsabschnitt für ein Verbinden mit einem Presshandwerkzeug ausgebildet ist und dass das Verbindungselement für ein Verbinden mit einer zumindest teilweise aus nachgiebigem Material ausgebildeten Druckübertragungsverbindung eingerichtet ist, insbesondere eine Flat-Face-Verbindung ist.

Ein Verbinden mit einer Druckübertragungsverbindung aus einem nachgiebigen Material ermöglicht einen örtlich flexiblen Einsatz der Presskraftübersetzers gegenüber dem Verpressungsort. Weiterhin können für die erfindungsgemäße Ausgestaltung des Presskraftübersetzers bereits verfügbare Mittel eingesetzt und entsprechend die Herstellungskosten gering gehalten werden

Vorzugsweise ist das Verbindungselement für ein lösbares Verbinden ausgebildet, so dass der Presskraftübersetzer bei einer Verwendung in einem System von einem Presswerkzeug getrennt und besser verstaut werden kann. Darüber hinaus kann dadurch der Presskraftübersetzer zusammen mit weiteren Druckübertragungsverbindungen verwendet werden.

Weiterhin kann das Gehäuse für eine Verwendung als Aufsatz für ein Handwerkzeug und der Verbindungsabschnitt für ein lösbares Verbinden ausgebildet sein. So kann der Presskraftübersetzer einfach transportiert, verstaut oder ersetzt werden. Des Weiteren kann der Presskraftübersetzer bzw. dessen Gehäuse als austauschbarer Aufsatz ausgebildet sein und so dieser zusammen mit einem Presshandwerkzeug eines Druckwerkzeugs, das für einen Einsatz mit unterschiedlichen Aufsätzen ausgebildet ist, zu verwenden.

Ferner kann ein Ventilelement zum Auslassen eines am Verbindungselement aufgebauten Drucks vorgesehen sein, um den Betriebsdruck bzw. den Druck in den Presskraftübersetzer auf einfache Weise zu steuern. Insbesondere kann bei einer Verwendung des Presskraftübersetzers zusammen mit einem Presswerkzeug ein Druck im Presswerkzeug bzw. in einer Druckübertragungsverbindung zwischen dem Presskraftübersetzer und dem Presswerkzeug abgelassen werden. Vorzugsweise ist das Ventilelement manuell bedienbar, so dass bei einer Ausbildung des Presskraftübersetzers als Aufsatz für ein Handwerkzeug der Druck einfach und nutzerfreundlich abgelassen werden kann.

Die oben genannte Aufgabe wird erfindungsgemäß auch gelöst durch ein Presswerkzeug zum Verpressen eines Pressverbinders, insbesondere für eine Verwendung in einem System zur Herstellung einer dichten Verbindung mit einem Werkstück, vorzugsweise mit einem Rohr, insbesondere mit einem Kunststoffrohr, mit einem Verbindungselement zum Aufnehmen eines hydraulischen Drucks, mit Übersetzungsmitteln zum Übersetzen eines aufgenommenen hydraulischen Drucks in eine Hubkraft und mit mindestens zwei Pressabschnitten zum Verpressen eines Pressverbinders an einem Verpressungsort, wobei das Verbindungselement für ein Verbinden mit einer zumindest teilweise aus nachgiebigem Material ausgebildeten Druckübertragungsverbindung eingerichtet ist, insbesondere eine Flat-Face-Verbindung ist, das dadurch gekennzeichnet ist, dass ein Vorspannelement zum Vorspannen der mindestens zwei Pressabschnitte vorgesehen ist und dass ein Vorspanngriff zum Vorspannen des Vorspannelements vorgesehen ist, wobei beim Vorspannen des Vorspannelements sich der erste Pressabschnitt in Richtung weg vom zweiten Pressabschnitt und beim Entspannen des Vorspannelements in Richtung zum zweiten Pressabschnitt bewegt.

Auch hier ermöglicht ein Verbinden mit einer Druckübertragungsverbindung ein örtlich flexibler Einsatz des Presswerkzeugs gegenüber dem Druckerzeugungsort.

Insbesondere kann dadurch ein Druck an einem vom Erzeugungsortentfernten Verpressungsort aufgenommen werden.

Vorzugsweise weist das Presswerkzeug eine Kammer, einen Kolben und mindestens einen Pressabschnitt auf. Im Betrieb kann ein durch das Druckwerkzeug unter Druck gesetztes Medium aus der Druckübertragungsverbindung durch das Verbindungselement in die Kammer eintreten und eine Bewegung des Kolbens herbeiführen, wobei der Kolben den mindestens einen Pressabschnitt antreibt. Im Ergebnis kann der mindestens eine Pressabschnitt mit einer Hubkraft linear bewegt werden, die dem aus der Druckübertragungsverbindung aufgenommenen Druck entspricht. Wenn der mindestens eine Pressabschnitt bestimmungsgemäß in Kontakt mit einem Pressverbinder gebracht worden ist, kann der Pressabschnitt den Pressverbinder durch die Hubkraft, mit der er angetrieben wird, verpressen.

Es ist ein Vorspannelement zum Vorspannen der mindestens zwei Pressabschnitte vorgesehen und ein Vorspanngriff zum Vorspannen des Vorspannelements ist vorgesehen. Durch den Vorspanngriff kann das Vorspannelement des Presswerkzeugs manuell angespannt und/oder entspannt und somit eine das Presswerkzeug einfach verwendet werden. Vorzugsweise kann der Vorspanngriff mit einer Hand bedient werden, so dass ein Vorspannen des Presswerkzeugs an einer schwierig zugänglichen Stelle vereinfacht ist. Vorzugsweise ist der Vorspanngriff als Transportgriff ausgebildet, so dass das Presswerkzeug einfach transportiert und kompakter gestaltet werden.

Bei einer weiteren Ausführungsform des Presswerkzeugs sind die mindestens zwei Pressabschnitte für einen seitlichen Eingriff mit einem Pressverbinder ausgebildet. Durch einen seitlichen Eingriff kann durch ein Presswerkzeug mit geringen Dimensionen, insbesondere mit einem geringen Pressabstand zwischen den Pressabschnitten verwendet werden, um Werkstücke mit großen Durchmessern zu verpressen. Weiterhin kann durch einen seitlichen Eingriff mit einem Pressverbinder das Presswerkzeug einfacher eingesetzt werden, wenn das zu verbindende Werkstück bzw. der Pressverbinder in einem Ort mit begrenzten Platzverhältnissen, insbesondere in einer Grube oder zwischen Bauwerken liegt.

Vorzugsweise weist der zu verpressende Pressverbinder mindestens zwei schwenkbar miteinander verbundene Schalenelemente auf, die zum Umschließen einer Schnittstelle zwischen zwei zu verbindenden Werkstücken, insbesondere zwischen zwei Rohrenden ausgebildet sind. Dabei kann an den Schalenelementen jeweils mindestens ein Presssitz zum Eingriff mit einem Presswerkzeug vorgesehen sein. Die Presssitze können derart seitlich am Pressverbinder angeordnet sein, dass ein Presswerkzeug mit einem Abstand zwischen dessen Pressabschnitten, der geringer als der Rohrdurchmesser ist, den Pressverbinder verpressen kann.

Bei einer weiteren Ausführungsform des Presswerkzeugs sind die mindestens zwei Pressabschnitte relativ zueinander beweglich ausgebildet, wobei die relative Bewegung durch einen bestimmten Mindestabstand der Pressabschnitte zueinander eingeschränkt ist und wobei der Mindestabstand in Abhängigkeit von einem zu verpressenden Pressverbinder bestimmt ist. Dadurch kann ein Pressverbinder bestimmungsgemäß verpresst und insbesondere ein übertriebenes Verpressen vermieden werden, dass zu einer Beschädigung einer zu erstellenden Verbindung führen könnte.

Die oben genannte Aufgabe wird erfindungsgemäß auch durch ein Verfahren zur Herstellung einer dichten Verbindung eines Pressverbinders mit einem Werkstück, insbesondere mit einem Rohr aus nachgiebigem Werkstoff, vorzugsweise eines Kunststoffrohres gelöst, bei dem an einem Druckerzeugungsort ein hydraulischer Druck ausgegeben wird, bei dem der hydraulische Druck von dem Druckerzeugungsort zu einem vom Druckerzeugungsort entfernten Verpressungsort übertragen wird und bei dem an dem Verpressungsort der hydraulische Druck aufgenommen und ein Pressverbinder entsprechend verpresst werden, wobei vor dem Ausgeben eines hydraulischen Drucks
- ein Pressverbinder an eine Schnittstelle zwischen zwei Rohrenden eingesetzt wird,
- ein Presswerkzeug vorgespannt wird und
- das Presswerkzeug am Pressverbinder eingesetzt und entspannt wird und
wobei durch Entspannen des Presswerkzeugs der Pressverbinder verdrehsicher mit einem zu verbindenden Werkstück verbunden wird.

Der zeitliche Aufwand beim Verbinden von Kunststoffrohrenden durch das erfindungsgemäße Verfahren ist niedriger als bei bekannten Vorgehensweisen. Insbesondere kann im Vergleich zum Schweißen auf ein Schälen des zu verbindenden PE-Rohrs, eine Aufwärm-, Halte- und Abkühlzeit verzichtet werden.

Weiterhin hat sich im Rahmen der vorliegenden Erfindung herausgestellt, dass beim erfindungsgemäßen das Serviceintervall von Service zu Service länger als bei den bekannten Schweißverfahren ist. Die Schweißgeräte sind somit öfter beim Service als das beschriebene Werkzeug.

Bei einer bevorzugten Ausführungsform des Verfahrens wird am Druckerzeugungsort eine erste Hubkraft erzeugt und in einen hydraulischen Druck übersetzt und am Verpressungsort der hydraulische Druck in eine zweite Hubkraft übersetzt und die zweite Hubkraft zum Verpressen eines Pressverbinders eingesetzt, wobei der hydraulische Druck vom Druckerzeugungsort bis zum Verpressungsort über eine Druckübertragungsverbindung aus nachgiebigem Werkstoff übertragen wird.

Dadurch können der Ort, an dem die erste Hubkraft erzeugt wird und der Ort, an dem die zweite Hubkraft eingesetzt wird, voneinander entfernt liegen. Weiterhin können bekannte, leicht erhältliche und kostengünstige Mittel für eine Übertragung eines hydraulischen Drucks vom Druckerzeugungsort bis zum Verpressungsort eingesetzt werden.

Bei einer weiteren Ausführungsform des Verfahrens werden die Verfahrensschritte "Ausgeben eines hydraulischen Drucks an dem Druckerzeugungsort" und "Übertragen des hydraulischen Drucks von dem Druckerzeugungsort zu dem Verpressungsort" mehrmals wiederholt, bis ein bestimmungsgemäßes verpresster Zustand des Pressverbinders erreicht wird.

So kann durch wiederholte Betätigung bzw. durch Wiederholen von manuell überwindbaren Bewegungen ausreichend Druck erzeugt werden, um anschließend eine ausreichende Hubkraft am Pressverbinder auszuüben und diesen bestimmungsgemäß zu verpressen. Beispielsweise kann durch mehrere kleine Betätigungen eines Presshandwerkzeugs des Druckwerkzeugs eine in Summe zum bestimmungsgemäßen Verpressen ausreichende Kraft ausgeübt werden, ohne dass die gesamte Kraft auf einmal erzeugt werden muss. Diese Ausgestaltung ist auch beim Einsatz eines Akku-betriebenen Handwerkzeugs vorteilhaft. Darüber hinaus kann somit sichergestellt werden, dass ein zu verspressender Pressverbinder ausreichend verpresst worden ist, um eine dichte Verbindung zu gewährleisten.

Vorzugsweise wird die Mindestanzahl der Wiederholungen in Abhängigkeit von dem vorliegend zu verpressenden Pressverbinder und/oder von mindestens einer Eigenschaft des Presswerkzeugs bestimmt. Insbesondere kann ein Durchmesser des Pressverbinders oder ein Volumen einer Druckkammer des Presswerkzeugs beim Bestimmen der Mindestanzahl berücksichtigt werden.

Bei einer weiteren Ausführungsform des Verfahrens wird beim Überschreiten eines vorbestimmten Grenzwerts für die auf den Pressverbinder insgesamt ausgeübte Hubkraft das Ausgeben eines hydraulischen Drucks gehemmt oder verhindert. Somit kann ein Ausüben einer zu hohen Hubkraft auf einen zu verpressenden Pressverbinder, was zu einer Beschädigung des Pressverbinders und somit der zu erstellenden Verbindung führen könnte, vermieden werden.

Vorzugsweise ist der vorbestimmte Grenzwert in Abhängigkeit von dem vorliegend zu verpressenden Pressverbinder und/oder von mindestens einer Eigenschaft des Presswerkzeugs bestimmt. Insbesondere kann ein Durchmesser des Pressverbinders oder ein Volumen einer Druckkammer des Presswerkzeugs beim Bestimmen des Grenzwerts berücksichtigt werden.

Weiterhin kann das Ausgeben eines hydraulischen Drucks dadurch gehemmt oder verhindert, dass eine Kopplung zwischen einem Presshandwerkzeug und einem Presskraftübersetzer getrennt wird. Ferner kann das Verhindern oder Hemmen angezeigt werden.

Es wird vor dem Ausgeben eines hydraulischen Drucks ein Pressverbinder an eine Schnittstelle zwischen zwei Rohrenden eingesetzt, ein Presswerkzeug vorgespannt und das Presswerkzeug am Pressverbinder eingesetzt und entspannt, wobei durch Entspannen des Presswerkzeugs der Pressverbinder verdrehsicher mit einem zu verbindenden Werkstück verbunden wird.

Dadurch kann ein Anwender das Presswerkzeug an den Pressverbinder am Verpressungsort positionieren und sich dann zum Druckerzeugungsort begeben, bevor das Verpressen erfolgt.

Vorzugsweise wird das Presswerkzeug dann mit dem Druckwerkzeug über eine Druckübertragungsverbindung verbunden. Weiterhin erfolgt das Ausgeben eines hydraulischen Drucks im Anschluss. Dadurch kann das Presswerkzeug an einem zu verpressenden Pressverbinder angesetzt bzw. bestimmungsgemäß am Pressverbinder positioniert und dann für einen Antrieb angeschlossen werden. So kann das Presswerkzeug einfacher in schwierig zugängliche Verpressungsorte eingebaut werden.

Die zuvor beschriebenen Merkmale des Systems, des Presskraftübersetzers, des Presswerkzeugs und des Verfahrens gelten sowohl für das System, für den Presskraftübersetzer, für das Presswerkzeug als auch für das Verfahren. Zudem sind die einzelnen Merkmale untereinander kombinierbar. Weitere Merkmale und Vorteile der vorliegenden Erfindung ergeben sich aus der nachfolgenden Beschreibung mehrerer Ausführungsbeispiele, wobei auf die beigefügte Zeichnung Bezug genommen wird. In der Zeichnung zeigen
- Fig. 1: ein System zur Herstellung einer dichten Verbindung eines Pressverbinders mit einem Werkstück;
- Fig. 2: ein Presskraftübersetzer als Teil eines Druckwerkzeugs eines Systems;
- Fig. 3a: ein Presswerkzeug in einem ersten Zustand, in einer seitlichen Schnittdarstellung;
- Fig. 3b: das Presswerkzeug aus der Fig. 3a in einem weiteren (dritten) Zustand, in einer seitlichen Schnittdarstellung;
- Fig. 4: das Presswerkzeug aus den Fig. 3a und 3b in einer Seitenansicht;
- Fig. 5: ein Ausführungsbeispiel eines an einer Rohrleitung angesetzten Pressverbinders in einem nicht vorgespannten, unverpressten Zustand;
- Fig. 6: den Pressverbinder aus der Fig. 5 und das Presswerkzeug aus den Fig. 3a bis 4 in dem ersten Zustand;
- Fig. 7: den Pressverbinder und das Presswerkzeug aus den Fig. 3a bis 6 in einem zweiten Zustand;
- Fig. 8: den Pressverbinder und das Presswerkzeug aus den Fig. 3a bis 7 in einem dritten Zustand;
- Fig. 9: den Pressverbinder und das Presswerkzeug aus den Fig. 3a bis 8 in einem vierten Zustand und
- Fig. 10: den Pressverbinder und das Presswerkzeug aus den Fig. 3a bis 9, wobei das Presswerkzeug gelöst ist.

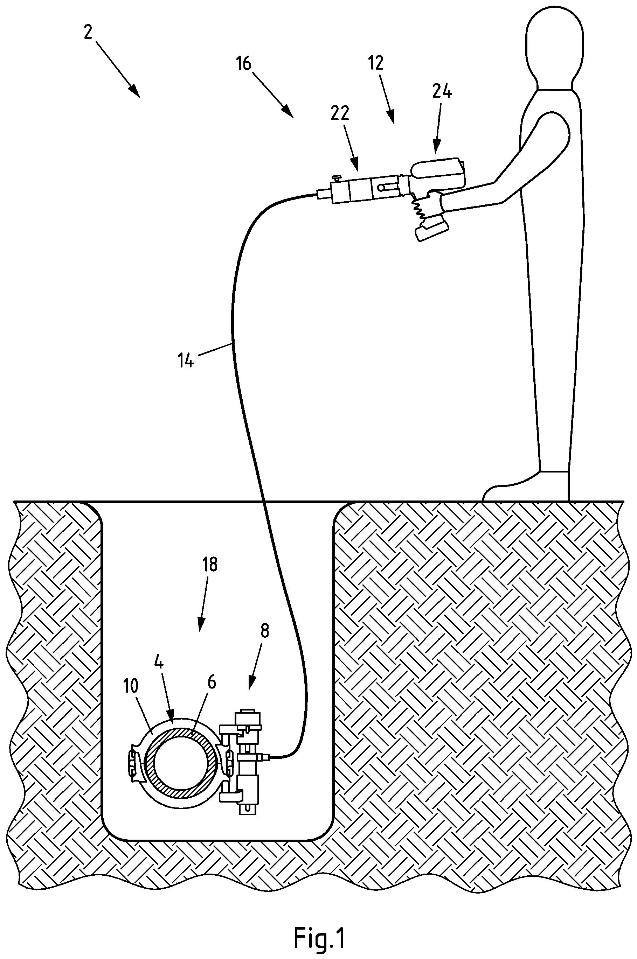

Fig. 1 zeigt ein System 2 zur Herstellung einer dichten Verbindung eines Pressverbinders 10 mit einem Werkstück 4 in Form einer Rohrleitung 6 aus Kunststoff. Das System 2 weist ein Presswerkzeug 8 zum Verpressen des Pressverbinders 10 und ein Druckwerkzeug 12 zum Antreiben des Presswerkzeugs 8 auf. Der Pressverbinder 10 ist an der Rohrleitung 6 und das Presswerkzeug 8 an den Pressverbinder 10 angebracht. Das Druckwerkzeug 12 ist als Handwerkzeug ausgebildet und mit dem Presswerkzeug 8 über eine Druckübertragungsverbindung 14 verbunden. Der Ort, an dem sich das Druckwerkzeug 12 befindet, wird im Folgenden als Druckerzeugungsort 16 und der Ort, an dem sich das Presswerkzeug 8 befindet, als Verpressungsort 18 bezeichnet.

Der Druckerzeugungsort 16 und der Verpressungsort 18 liegen voneinander entfernt, sowohl hinsichtlich der Höhe als auch horizontal.

Das Druckwerkzeug 12 ist als Handwerkzeug 20 ausgebildet und weist einen Presskraftübersetzer 22 und ein Presshandwerkzeug 24 auf. Die Druckübertragungsverbindung 14 ist zumindest teilweise aus nachgiebigem Material ausgebildet.

Im Folgenden werden der Presskraftübersetzer 22 des Druckwerkzeugs 12 und das Presswerkzeug 8 sowie deren Funktionsweise näher erläutert.

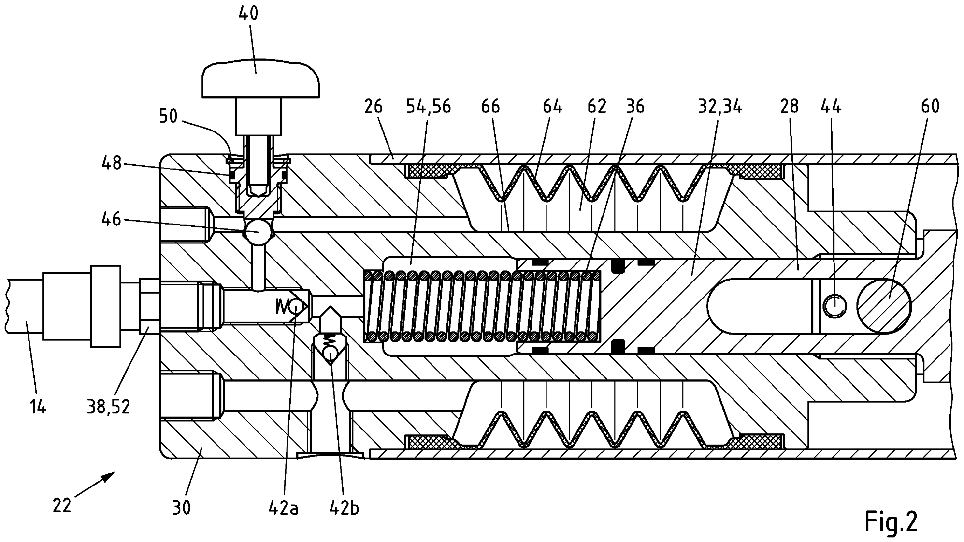

Fig. 2 zeigt einen Presskraftübersetzer 22 als Teil eines Druckwerkzeugs 12 eines Systems 2. Der Presskraftübersetzer 22 weist ein Gehäuse 26, einen Verbindungsabschnitt 28 zum Aufnehmen einer Hubkraft und zur Verbindung mit einem Presshandwerkzeug 24, einen Ventilblock 30, einen Pumpstößel 32 als Übersetzungsmittel 34 zum Übersetzen einer aufgenommenen Hubkraft in einen hydraulischen Druck, eine Druckfeder 36, eine Verbindungselement 38 zum Ausgeben eines hydraulischen Drucks, ein Sperrventil 40 und zwei Rückschlagventile 42a, 42b auf.

Zum Herstellen des in der Fig. 2 gezeigten Presskraftübersetzers 22 wird der Pumpstößel 32 zusammen mit der Druckfeder 36 in den Ventilblock 30 geschoben und mit einem Gewindestift 44 gesichert. Dann werden Rückschlagventile 42a, 42b in dafür vorgesehenen Bohrungen geschraubt. Im Anschluss wird das Sperrventil 40, das eine Kugellagerkugel 46 aufweist und das an einem Ende durch ein Dichtelement 48 abgedichtet wird, montiert und über einen Sicherungsring 50 gesichert. An einer Auslassseite des Ventilblocks 30 wird eine Flat-Face-Verbindung 52 für ein Verbinden mit einem Hydraulikschlauch 14 angebracht. Weitere Bohrungen des Ventilblocks 30 werden mittels VSTI-Verschraubungen ("Verschluss-Stopfen für Einschraublöcher").

Der Ventilblock 30 weist einen Innenraum 54 auf, in dem der Pumpstößel 32 in einer Vorwärtsrichtung und in einer entgegengesetzten Rückwärtsrichtung bewegt werden kann. Ein Bereich 56 des Innenraums 54, der durch den Pumpstößel 32 frei gelassen ist, ist zur Aufnahme von Öl vorgesehen. Das Volumen dieses Bereichs variiert mit der Position des Pumpstößels 32 in dem Innenraum 54.

Der Presskraftübersetzer 22 ist mit einem Presshandwerkzeug 24 (in der Fig. 2 nicht gezeigt) verbunden. Hierzu wird der Presskraftübersetzer 22 an einer Seite des Ventilblocks über den Verbindungsabschnitt 28 mit dem Presshandwerkzeug 24 angeschlossen, wobei der Verbindungsabschnitt 28 dem Ende des Ventilblocks, die die Flat-Face-Verbindung 52 aufweist, entgegen angeordnet ist. Die Verbindung zwischen dem Verbindungsabschnitt 28 und dem Presshandwerkzeug 24 erfolgt über einen Verriegelungsbolzen 60.

An der anderen Seite des Presskraftübersetzers 22 ist die Druckübertragungsverbindung 14 angeschlossen, die am anderen Ende mit dem Presswerkzeug 8 verbunden ist.

Durch Aktivieren des Presshandwerkzeugs 24 wird der Pumpstößel 32 axial in den Ventilblock 30 geschoben. Durch diese Bewegung wird Öl, das in dem Ventilblock 30 bzw. in dem Innenraum 54 angeordnet ist, verdrängt, so dass das Öl durch das Rückschlagventil 42a und die Flat-Face-Verbindung 52 in die Druckübertragungsverbindung 14 strömt, um dann in das Presswerkzeug 8 zu gelangen. Das Rückschlagventil 42a schränkt den Ölfluss während einer Bewegung des Pumpstößels 32 in Richtung zu der Flat-Face-Verbindung 52 ein. Zudem ist das von Hand betätigbare Sperrventil 40 während des gesamten Pressvorgangs dicht geschlossen.

Sobald die Bewegung des Teils des Presshandwerkzeugs 24, das mit dem Pumpstößel 32 bzw. mit dem Verbindungsabschnitt 28 verbunden ist, beendet wurde, das heißt im Zustand wie in der Fig. 2 dargestellt, fährt der Pumpstößel 32 durch die Federkraft der Druckfeder 36 aus dem Ventilblock 30 heraus. Hierbei sperrt das Rückschlagventil 42a einen Ölrückfluss in den Innenraum 54 des Ventilblocks 30, so dass der bei der Vorwärtsbewegung des Pumpstößels 32 erzeugte hydraulische Druck in Richtung des Presswerkzeugs 8 in der Druckübertragungsverbindung 14 bestehen bleibt.

Bei einer Rückbewegung des Pumpstößels 32, also beim Ausfahren des Pumpstößels 32 aus dem Ventilblock 30 heraus in Richtung des Presshandwerkzeugs 24 entsteht ein Unterdruck in dem Innenraum 54, durch den sich das Rückschlagventil 42b öffnet. Dadurch kann Öl, das sich ursprünglich in einem Zwischenraum 62 zwischen einem Faltenbalg 64 und einem Außenbereich 66 des Ventilblocks 30 befindet, durch die Bohrung, in der das Rückschlagventil 42b angeordnet ist, in den Innenraum 54 fließen. Wenn der Pumpstößel 32 ausgefahren ist, ist der Innenraum 54 wieder mit Öl gefüllt und der Hub des Pumpstößels 32 ist beendet.

Nach Erreichen eines vorbestimmten maximalen Betriebsdrucks in den Innenraum 54 kann das Sperrventil 40 per Hand geöffnet werden, so dass Öl druckentlastet in den Zwischenraum 62 abfließt. Vorzugsweise ist der maximale Betriebsdruck bei drei Hüben des Pumpstößels 32 erreicht. Allerdings kann ein Ölvolumen vorgesehen sein, das für mehr als drei Hübe ausgelegt ist, so dass weitere Presshandwerkzeuge mit einem höheren Ölbedarf gegebenenfalls eingesetzt werden können. Der Hydraulikschlauch wird vorgefüllt mit einem vorbestimmten Ölvolumen geliefert, so dass Luftblasen im hydraulischen System vermieden werden können. Das Öl bleibt so lange in der Leitung, bis der Schlauch angeschlossen wird, erst dann gibt die Flat-Face Kupplung das Öl frei.

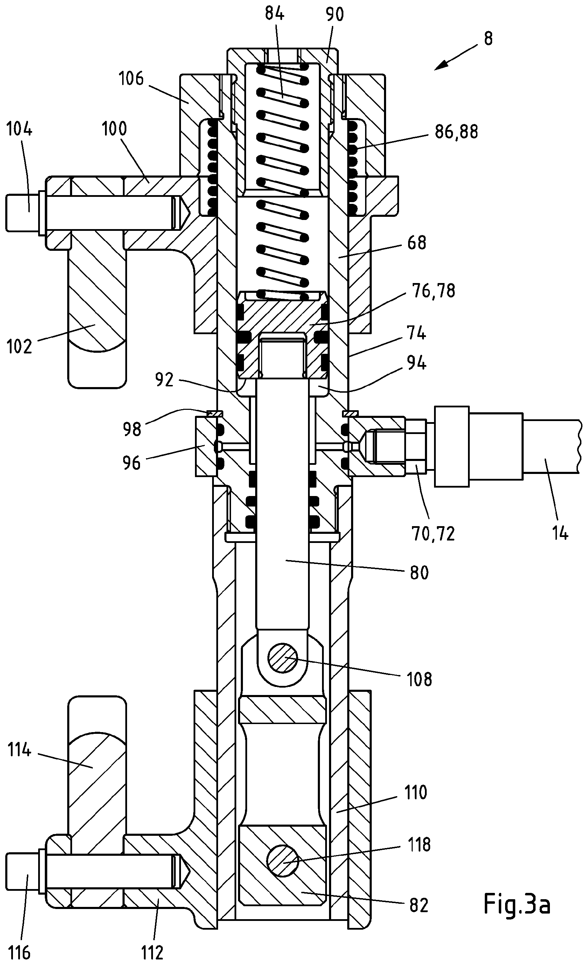

Fig. 3a zeigt ein Presswerkzeug 8 in einer seitlichen Schnittdarstellung. Das Presswerkzeug 8 weist unter anderen ein Gehäuse 68, eine Flat-Face-Verbindung 70 als Verbindungselement 72 zur Aufnahme eines hydraulischen Drucks, ein Zylinderrohr 74, Übersetzungsmittel 78 in Form eines Kolbens 76, eine Kolbenstange 80, ein Gelenkstück 82, eine Druckfeder 84 und eine Vorspannfeder 86 als Vorspannelement 88 zum Vorspannen des Presswerkzeugs 8 auf.

Zum Herstellen des Fig. 3a gezeigten Presswerkzeugs 8 wird die mit dem Kolben 76 verschraubte Kolbenstange 80 zusammen mit der Druckfeder 84 in das Zylinderrohr 74 eingeschoben. Zum Verschließen des Zylinderohrs 74 wird ein Deckel 90 an einem distalen Ende des Zylinderrohrs 74 angebracht bzw. geschraubt. Ein Raum im Zylinderrohr 74, um der Kolbenstange 80 angeordnet und teilweise durch den Boden 92 des Kolbens 76 eingeschränkt bildet eine hydraulische Kammer 94.

Anschließend wird ein Anschlussring 96 mit montierter Flat-Face-Verbindung 70 über das Zylinderrohr 74 bis zum Anschlag geschoben und mit einem Sicherungsring 98 gesichert. Der Anschlussring 96 ist um 360 ° drehbar und weist zwei O-Ringe und zum Abdichten dessen Verbindung mit dem Zylinderrohr 74 auf. Dann wird ein erster Kragarm 100 mit einem ersten Pressabschnitt 102 und einem Bolzen 104 über das Zylinderrohr 74 geschoben.

Als Nächstes wird die Vorspannfeder 86 angebracht. Hierzu wird die Vorspannfeder 86 mit einem Anschlagelement 106 an dem Zylinderrohr 74 verschraubt. Als nächstes wird das Gelenkstück 82 mittels eines Bolzens 108 mit der Kolbenstange 80 verbunden. Im nächsten Schritt wird eine Hülse 110 mit dem Zylinderrohr 74 verschraubt. Als Letztes wird ein zweiter Kragarm 112 mit einem zweiten Pressabschnitt 114 und einem Bolzen 116 über die Hülse 110 geschoben und über einen Bolzen 118 mit dem Gelenkstück 82 verbunden, so dass der erste Pressabschnitt 102 des ersten Kragarms 100 und der zweite Pressabschnitt 114 des zweiten Kragarms 112 gegenübereinander angeordnet sind.

Fig. 3a zeigt das Presswerkzeug 8 in einem Zustand, bei dem die Pressabschnitte 102, 114 einen vorbestimmten Abstand zueinander aufweisen.

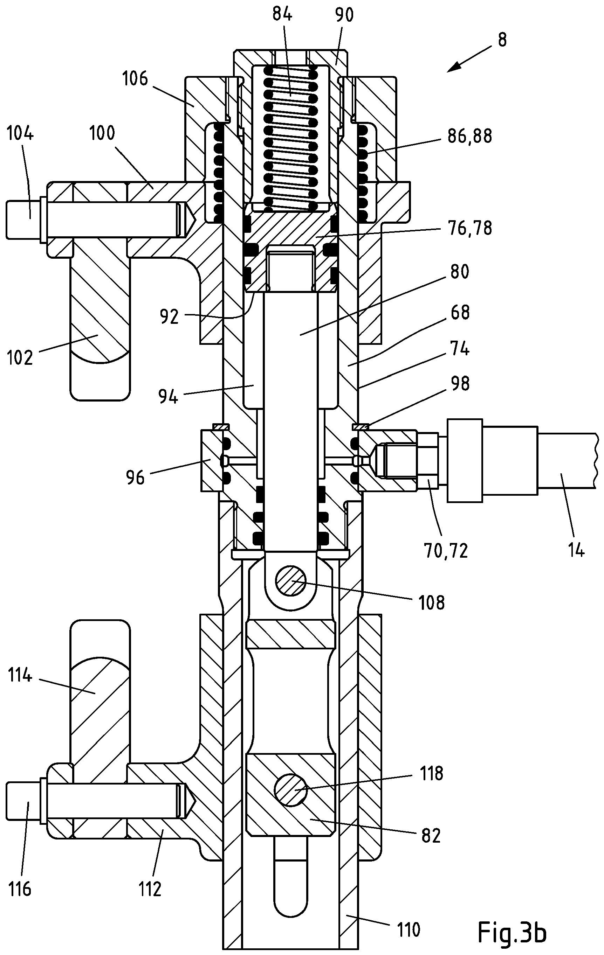

Die Fig. 3b zeigt das Presswerkzeug 8 in einem Zustand, bei dem die Pressabschnitte 102, 114 einen geringeren Abstand zueinander aufweisen. Öl, das sich in der hydraulischen Kammer 94 befindet, drückt auf dem Boden 92 des Kolbens 76 in Richtung des Deckels 90. Der Kolben 76 treibt in seiner Bewegung die Kolbenstange 80 und somit das Gelenkstück 82 und den zweiten Kragarm 112 mit dem zweiten Pressabschnitt 114 in Richtung des ersten Pressabschnitts 102 an. Das Anschlagelement 106 schränkt die axiale Bewegung des ersten Pressabschnittes 88 ein, so dass beim Verpressen der zweite Pressabschnitt 114 einen zu verpressenden Pressverbinder gegen den ersten Pressabschnitt 102 drückt.

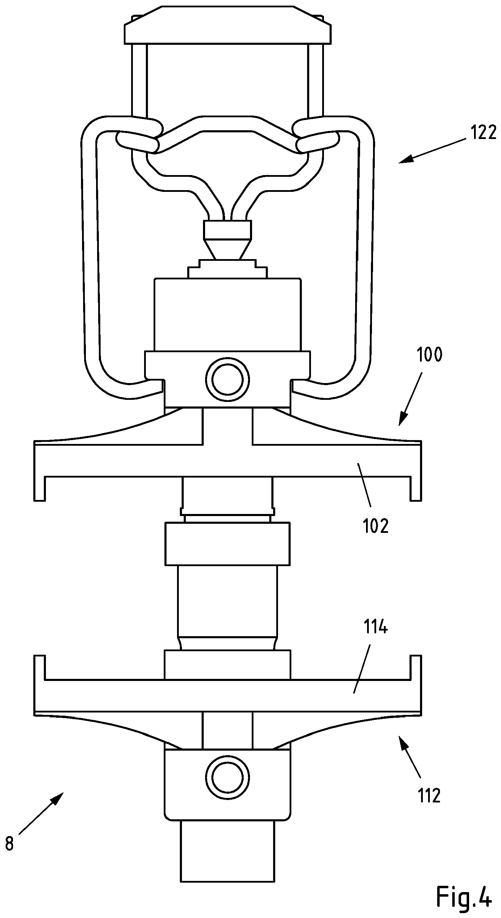

Fig. 4 zeigt das Presswerkzeug 8 in einer Seitenansicht, wobei ein Vorspanngriff 122 vorgesehen ist. Der Vorspanngriff 122 ist dazu eingerichtet, als Transportgriff für das Presswerkzeug 8 verwendet zu werden und kann manuell angezogen werden. Ein Ziehen des Vorspanngriffs 122 führt ein Zusammendrücken der Vorspannfeder 86 herbei.

Das Presswerkzeug 8 kann wie folgt verwendet werden.

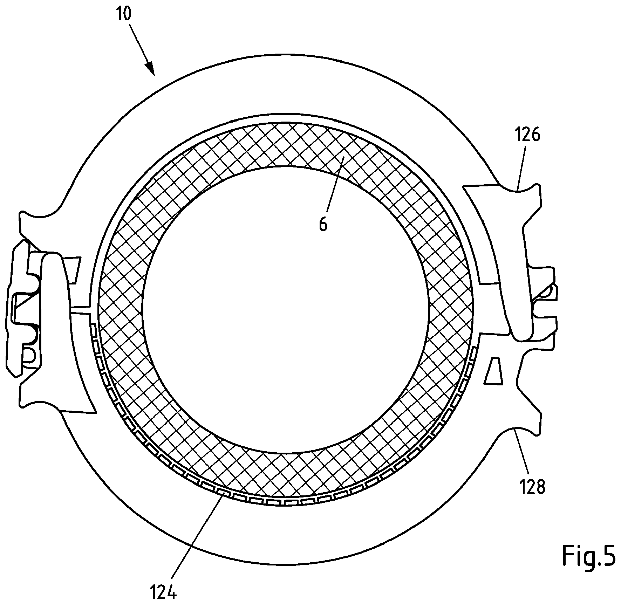

Zunächst wird das Presswerkzeug in eine ersten, in der Fig. 3a gezeigten Zustand gebracht. Hierzu wird die Vorspannfeder 86, gegebenenfalls durch Anziehen des Vorspanngriffs 122, angespannt bzw. zusammengedrückt. Dann werden die somit auseinander bewegten Pressabschnitte 102, 114 durch zumindest teilweises Entspannen der Vorspannfeder 86 in Eingriff mit einem Pressverbinder 10 gebracht, wie im Zusammenhang mit den Fig. 5 bis 10 näher erläutert wird. Durch Loslassen der Vorspannfeder 86 bzw. gegebenenfalls durch Loslassen des Vorspanngriffs 122 greifen die Pressabschnitte 102, 114 den Pressverbinder 10 mit einer der Federkonstante der Vorspannfeder 86 entsprechenden Vorspannkraft, so dass sich das Presswerkzeug in einem zweiten Zustand befindet.

In einem nächsten Schritt wird das Presswerkzeug in einen dritten Zustand gebracht, der in der Fig. 3b gezeigt ist. Hierfür wird ein durch den Presskraftübersetzer 22 verdrängtes Öl durch die Flat-Face-Verbindung 52 über den Anschlussring 96 bis zur hydraulischen Kammer 94 im Zylinderrohr 74 geleitet. Das Öl überträgt einen hydraulischen Druck auf den Boden 92 des Kolbens 76 und bewegt diesen in Richtung des Deckels 90 des Zylinderrohrs 74 entgegen der Kraft der Druckfeder 84 mit einer entsprechenden Hubkraft. Der Kolben 76 treibt die Kolbenstange 80 mit der dem am Kolben 76 ausgeübten hydraulischen Druck entsprechenden Hubkraft an. Die Bewegung der Kolbenstange 80 bewirkt eine Bewegung des Gelenkstücks 82, die wiederum den zweiten Kragarm 112 antreibt. Somit wird der zweite Kragarm 112 zusammen mit dem zweiten Pressabschnitt 114 in Richtung des ersten Pressabschnitts 102 bewegt und somit der Pressverbinder 10 verpresst.

Die Fig. 5 bis 10 zeigen die sukzessiven Zustände, die ein oben beschriebenes Presswerkzeug 8 beim Durchführen eines Verfahrens zur Herstellung einer dichten Verbindung eines Pressverbinders mit einem Werkstück annimmt, und die entsprechende Wirkung auf einen Pressverbinder 10.

Die Fig. 5 zeigt eine Ausgangssituation, bei der ein Pressverbinder 10 mit einem Schneidehalbring 124 an einer Rohrleitung 6 angebracht, jedoch weder vorgespannt noch verpresst ist.

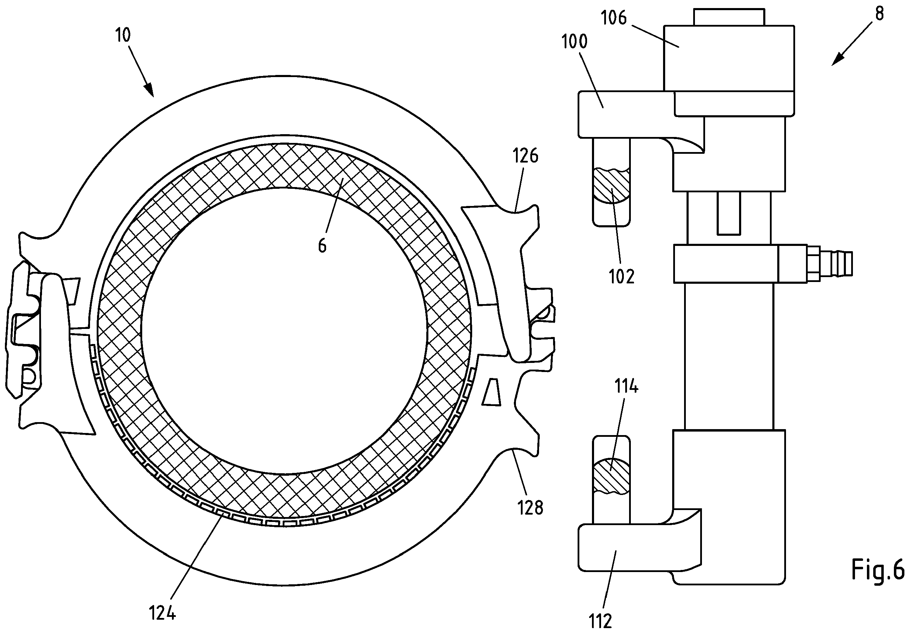

In Fig. 6 ist das Presswerkzeug 8 in dem ersten Zustand. Das Presswerkzeug 8 ist vorgespannt, gegebenenfalls durch Ziehen eines Vorspanngriffs 122, und die Pressabschnitte 102, 114 sind auseinander bewegt. Die Pressabschnitte 102, 114 sind so weit aus einander weg bewegt, dass der Kragarm 100, der den Pressabschnitt 102 trägt, gegen das Anschlagelement 106 stößt. Durch Ziehen des Vorspanngriffs 122 bzw. Anspannen des Vorspannelements 88 entsteht eine vordefinierte Vorspannkraft. Der Pressverbinder 10 ist weiterhin weder vorgespannt und noch verpresst.

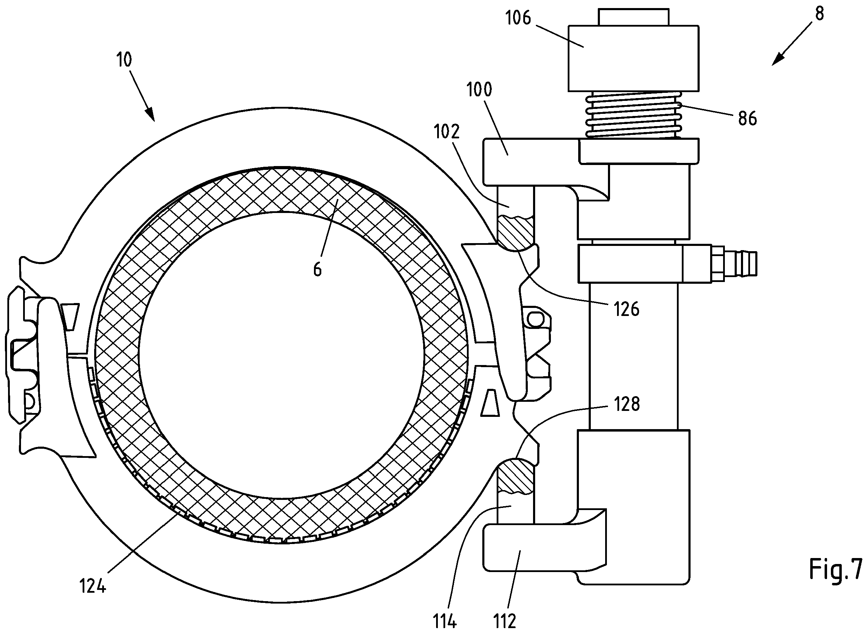

Fig. 7 zeigt das Presswerkzeug 8 und den Pressverbinder 10 in dem zweiten Zustand. Das Vorspannelement 88 des Presswerkzeugs ist 8 entspannt, es wurde gegebenenfalls der Vorspanngriff 122 losgelassen. Beim Entspannen hat sich der erste Kragarm 100 samt erstem Pressabschnitt 102 in Richtung des zweiten Pressabschnitts 114 bewegt, so dass der Abstand zwischen den Pressabschnitten 102, 114 kleiner ist, als in dem in der Fig. 6 gezeigten Zustand. Die Pressabschnitte 102, 114 stehen jeweils mit einem Presssitz 126, 128 des Pressverbinders 10 in Eingriff. Durch die Federkraft des Vorspannelements 88 ist der Pressverbinder 10 teilweise zusammengedrückt und das Presswerkzeug 8 bleibt in Eingriff mit den Presssitzen 126, 128. Der Schneidehalbrings 124 des Pressverbinders 10 dringt in die Oberfläche der Rohrleitung 6 ein, so dass der Pressverbinder 10 verdrehgesichert an der Rohrleitung 6 angebracht ist. Im Ergebnis ist der Pressverbinder 10 vorgespannt, jedoch nicht verpresst.

Anschließend wird das Presswerkzeug 8 mit dem Presskraftübersetzer 22 des Druckwerkzeugs 12 über einen Hydraulikschlauch als Druckübertragungsverbindung 14 mit Flat-Face-Verbindung angeschlossen.

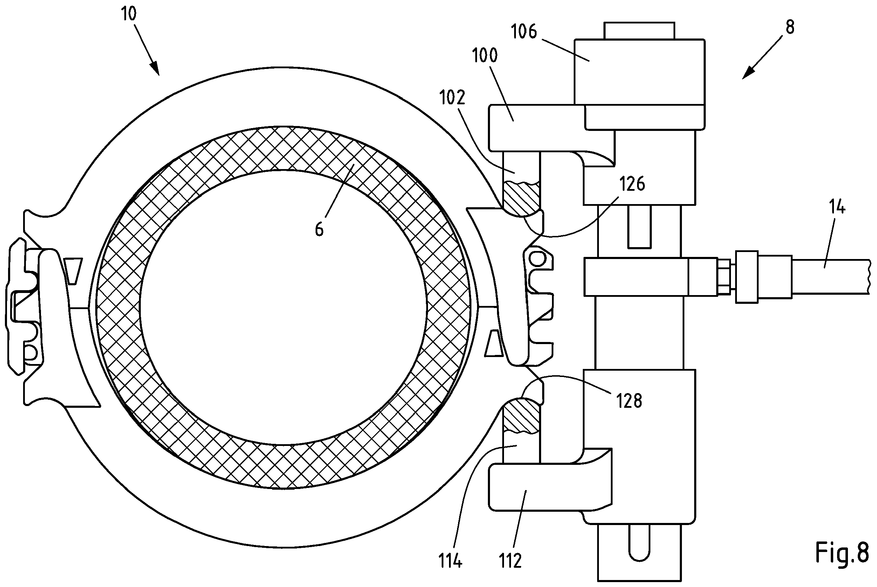

Fig. 8 zeigt das Presswerkzeug 8 und den Pressverbinder in dem dritten Zustand. Dabei nimmt das Presswerkzeug 8 durch seine Flat-Face-Verbindung 70 einen hydraulischen Druck aus dem Druckwerkzeug 12 auf und übersetzt diesen Druck in eine Hubkraft. Das Presswerkzeug 8 übt die Hubkraft durch die Pressabschnitte 102, 114 auf den jeweiligen Presssitz 126, 128 des Pressverbinders 10 aus. Somit wird der Pressverbinder 10 verpresst.

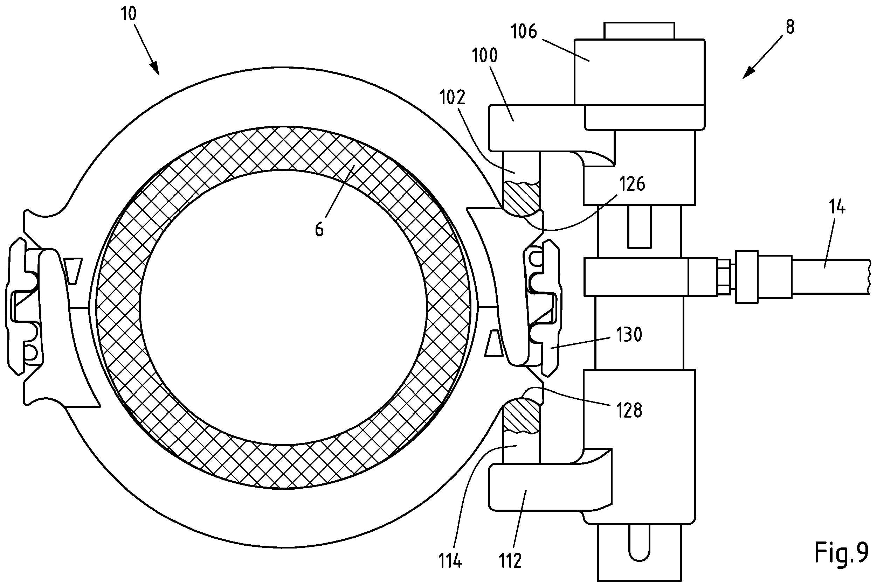

In Fig. 9 übt das Presswerkzeug 8 eine ausreichende Hubkraft auf den Pressverbinder 10 aus, um den Pressverbinder 10 bestimmungsgemäß zu verpressen. Im bestimmungsgemäß verpressten Zustand sind Dichtungselemente der Pressverbinders 10, die an der Inneren Fläche des Pressverbinders 10 angeordnet sind, gegen der Außenwand der Rohrleitung 6 gepresst. Dadurch liegt der Pressverbinder 10 dicht an der Rohrleitung 6 an. Ein Sicherungselement 130 wurde an den Pressverbinder 10 angebracht, das den Pressverbinder 10 im verpressten Zustand hält. So ist der Pressverbinder 10 verpresst und gesichert. Somit befinden sich das Presswerkzeug 8 und der Pressverbinder 10 in einem vierten Zustand.

Das Sicherungselement 130 kann auf den Pressverbinder 10 seitlich aufgeschoben werden. Vorzugsweise kann das Sicherungselement mit einer Hand geschoben werden.

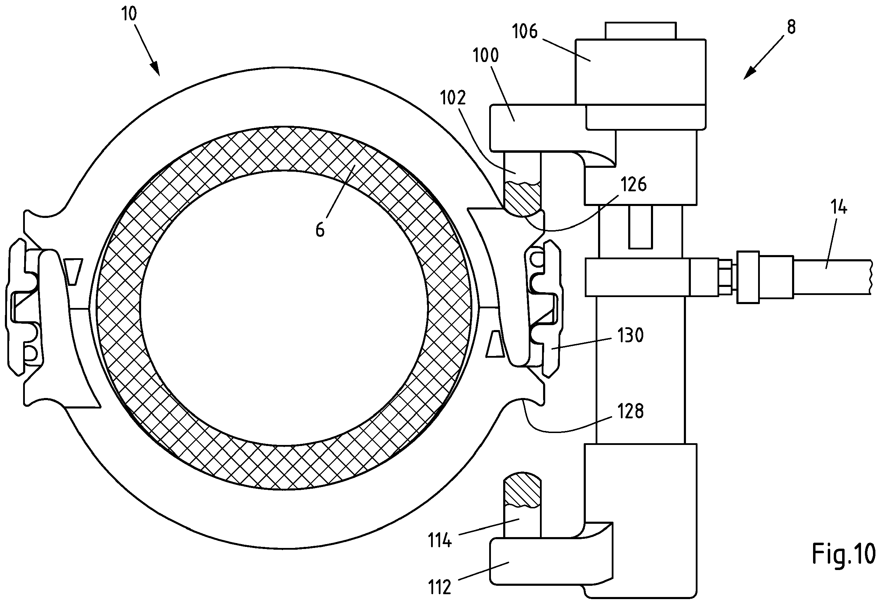

In Fig. 10 ist der Pressverbinder 10 verpresst und gesichert. Das Presswerkzeug 8 übt keine Hubkraft mehr auf den Pressverbinder 10 aus. Weiterhin ist das Presswerkzeug 8, gegebenenfalls durch Ziehen des Vorspanngriffs 122, angespannt, so dass die Pressabschnitte 102, 114 voneinander weg bewegt sind. In diesem Zustand kann das Presswerkzeug 8 einfach vom Pressverbinder 10 entfernt bzw. gelöst werden. Alternativ kann nach dem Verpressen das Presswerkzeug 8 ohne erneutes Vorspannen von dem Verbinder 10 entnommen werden.

Im Folgenden wird eine Verwendung des Systems 2 exemplarisch beschrieben.

Zunächst wird eine erste Hubkraft mittels des Druckwerkzeugs 12 in einen hydraulischen Druck übersetzt und über die Druckübertragungsverbindung 14 an das Presswerkzeug 8 übertragen. Dann nimmt das Presswerkzeug 8 den hydraulischen Druck auf und übersetzt diesen in eine entsprechende zweite Hubkraft. Die zweite Hubkraft reicht aus, um der Kraft der Vorspannfeder 86 entgegenzuwirken bzw. um diese zu überwinden und den ersten Kragarm 100 bis zum Anschlagelement 106 zu fahren.

Anschließend wird durch eine vordefinierte Mindesthubanzahl am Druckwerkzeug 12 bzw. eine vordefinierte Mindestanzahl an Betätigungen des Druckwerkzeugs 12 der Pressverbinder 10 verpresst. Ein "Überpressen" durch zu viele Hübe wird durch eine Begrenzung basierend auf einem vorbestimmten Abstand zwischen den Pressabschnitten 102, 114 des Presswerkzeugs verhindert. Entsprechend schaltet das Druckwerkzeug 12 bzw. das Presshandwerkzeug 24 des Druckwerkzeugs 12 beim Erreichen eines dem vorbestimmten Abstand zwischen den Pressabschnitten 102, 114 des Presswerkzeugs 8 entsprechenden Betriebsdrucks automatisch ab.

Sobald dieser Betriebsdruck erreicht und das fertige Pressmaß des Pressverbinders 10 bzw. der vorbestimmte Abstand zwischen den Pressabschnitten 102, 114 erreicht ist, kann ein Sicherungselement 130 eingesetzt werden. Zum Schluss wird das Presswerkzeug 8 aufgefahren, indem am Presskraftübersetzer 22 das Sperrventil 40 aufgedreht wird. Dadurch kann das Öl aus dem Presswerkzeug 8 über die Druckübertragungsverbindung 14 bis in das Presskraftübersetzer 22 durch den geöffneten Kanal des geöffneten Sperrventils 40, in den Tank 64 zurückfließen.

## Patentansprüche

1. System zur Herstellung einer dichten Verbindung eines Pressverbinders (10) mit einem Werkstück (4), insbesondere mit einem Rohr, vorzugsweise mit einem Kunststoffrohr,
- mit einem Presswerkzeug (8) zum Verpressen eines Pressverbinders (10) und
- mit einem Druckwerkzeug (12) zum Antreiben des Presswerkzeug (8),
- wobei das Druckwerkzeug (12) dazu eingerichtet ist, an einem Druckerzeugungsort (16) einen hydraulischen Druck auszugeben,
- wobei das Presswerkzeug (8) dazu eingerichtet ist, an einem Verpressungsort (18) einen hydraulischen Druck aufzunehmen und einen Pressverbinder (10) entsprechend zu verpressen und
- wobei das Druckwerkzeug (12) und das Presswerkzeug (8) über eine hydraulische Druckübertragungsverbindung (14) verbunden sind,
- wobei der Druckerzeugungsort (16) und der Verpressungsort (18) voneinander entfernt liegen,
- wobei das Presswerkzeug (8) mindestens zwei gegenüberliegende Pressabschnitte (102, 114) mit einem variablen Abstand zueinander aufweist **dadurch gekennzeichnet, dass** das Presswerkzeug (8) ein Vorspannelement (88) aufweist,
- dass das Presswerkzeug (8) für das Annehmen von mindestens drei Zuständen eingerichtet ist,
- wobei in einem ersten Zustand das Vorspannelement (88) angespannt ist und die Pressabschnitte (102, 114) beabstandet zueinander angeordnet sind,
- wobei in einem zweiten Zustand die Pressabschnitte (102, 114) durch Entspannen des Vorspannelements (88) in Eingriff mit einem Pressverbinder (10) angespannt sind, und
- wobei in einem dritten Zustand die Pressabschnitte (102, 114) eine Hubkraft in Richtung zu einander auf den Pressverbinder (10) ausüben und
- dass in dem zweiten Zustand der Pressverbinder (10) verdrehsicher mit einem zu verbindenden Werkstück (4) verbunden ist.

2. System nach Anspruch 1,
**dadurch gekennzeichnet,**
**dass** die Druckübertragungsverbindung (14) zumindest teilweise aus einem nachgiebigen Material ausgebildet ist.

3. System nach Anspruch 1 oder 2,
**dadurch gekennzeichnet,**
- **dass** die Druckübertragungsverbindung (14) einen Hydraulikschlauch aufweist und
- **dass** der Hydraulikschlauch mit dem Druckwerkzeug (12) und mit dem Presswerkzeug (8) verbunden ist, insbesondere jeweils über eine Flat-Face-Verbindung (52, 70).

4. System nach einem der Ansprüche 1 bis 3,
**dadurch gekennzeichnet,**
- **dass** das Druckwerkzeug (12) als Handwerkzeug mit einem Presshandwerkzeug (24) und mit einem Presskraftübersetzer (22) ausgebildet ist,
- wobei das Presshandwerkzeug (24) dazu eingerichtet ist, eine Hubkraft zu erzeugen und an dem Presskraftübersetzer (22) zu übertragen und
- wobei der Presskraftübersetzer (22) dazu eingerichtet ist, eine aus dem Presshandwerkzeug (24) übertragene Hubkraft in einen hydraulischen Druck zu übersetzen und auszugeben.

5. System nach einem der Ansprüche 1 bis 4,
**dadurch gekennzeichnet,**
**dass** das Presswerkzeug (8) dazu eingerichtet ist, einen durch die Druckübertragungsverbindung (14) übertragenen Druck in eine Hubkraft zu übersetzen, und einen Pressverbinder (10) durch Ausüben der Hubkraft zu verpressen.

6. System nach einem der Ansprüche 1 bis 5,
**dadurch gekennzeichnet,**
**dass** das Druckwerkzeug (12) dazu eingerichtet ist, beim Erreichen eines Grenzwerts für den variablen Abstand der Pressabschnitte (102, 114) des Presswerkzeug (8) zueinander abzuschalten.

7. Presswerkzeug zum Verpressen eines Pressverbinders (10), insbesondere für eine Verwendung in einem System zur Herstellung einer dichten Verbindung mit einem Werkstück (4), insbesondere mit einem Rohr, vorzugsweise mit einem Kunststoffrohr,
- mit einem Gehäuse (68),
- mit einem Verbindungselement (72) zum Aufnehmen eines hydraulischen Drucks,
- mit Übersetzungsmitteln (78) zum Übersetzen eines aufgenommenen hydraulischen Drucks in eine Hubkraft und
- mit mindestens zwei Pressabschnitten (102, 114) zum Verpressen eines Pressverbinders (10) an einem Verpressungsort (18),
- wobei das Verbindungselement (72) für ein Verbinden mit einer zumindest teilweise aus nachgiebigem Material ausgebildeten Druckübertragungsverbindung (14) eingerichtet ist, insbesondere eine Flat-Face-Verbindung (70) ist,
**dadurch gekennzeichnet,**
- **dass** ein Vorspannelement (88) zum Vorspannen der mindestens zwei Pressabschnitte (102, 114) vorgesehen ist und
- **dass** ein Vorspanngriff (122) zum Vorspannen des Vorspannelements (88) vorgesehen ist,
- wobei beim Vorspannen des Vorspannelements sich der erste Pressabschnitt in Richtung weg vom zweiten Pressabschnitt und beim Entspannen des Vorspannelements in Richtung zum zweiten Pressabschnitt bewegt.

8. Presswerkzeug nach Anspruch 7,
**dadurch gekennzeichnet,**
**dass** die mindestens zwei Pressabschnitte (102, 114) für einen seitlichen Eingriff mit einem Pressverbinder (10) ausgebildet sind.

9. Presswerkzeug nach Anspruch 7 oder 8,
- dass die mindestens zwei Pressabschnitte (102, 114) relativ zueinander beweglich ausgebildet sind,
- wobei die relative Bewegung durch einen bestimmten Mindestabstand der Pressabschnitte (102, 114) zueinander eingeschränkt ist und
- wobei der Mindestabstand in Abhängigkeit von einem zu verpressenden Pressverbinder (10) bestimmt ist.

10. Verfahren zur Herstellung einer dichten Verbindung eines Pressverbinders mit einem Werkstück (4), insbesondere mit einem Rohr aus nachgiebigem Werkstoff, vorzugsweise eines Kunststoffrohres,
- bei dem an einem Druckerzeugungsort (16) ein hydraulischer Druck ausgegeben wird,
- bei dem der hydraulische Druck von dem Druckerzeugungsort (16) zu einem vom Druckerzeugungsort (16) entfernten Verpressungsort (18) übertragen wird und
- bei dem an dem Verpressungsort (18) der hydraulische Druck aufgenommen und ein Pressverbinder (10) entsprechend verpresst werden,
- wobei vor dem Ausgeben eines hydraulischen Drucks
- ein Pressverbinder (10) an eine Schnittstelle zwischen zwei Rohrenden eingesetzt wird,
- ein Presswerkzeug (8) vorgespannt wird und
- das Presswerkzeug (8) am Pressverbinder (10) eingesetzt und entspannt wird und
- wobei durch Entspannen des Presswerkzeugs (8) der Pressverbinder (10) verdrehsicher mit einem zu verbindenden Werkstück verbunden wird.

11. Verfahren nach Anspruch 10,
- bei dem am Druckerzeugungsort (16) eine erste Hubkraft erzeugt und in einen hydraulischen Druck übersetzt wird und
- bei dem am Verpressungsort (18) der hydraulische Druck in eine zweite Hubkraft übersetzt wird und die zweite Hubkraft zum Verpressen eines Pressverbinders (10) eingesetzt wird,
- wobei der hydraulische Druck vom Druckerzeugungsort (16) bis zum Verpressungsort (18) über eine Druckübertragungsverbindung (14) aus nachgiebigem Werkstoff übertragen wird.

12. Verfahren nach Anspruch 10 oder 11,
bei dem die Verfahrensschritte
- Ausgeben eines hydraulischen Drucks an einem Druckerzeugungsort (16) und
- Übertragen des hydraulischen Drucks von dem Druckerzeugungsort (16) zu einem vom Druckerzeugungsort (16) entfernten Verpressungsort (18) mehrmals wiederholt werden, bis ein bestimmungsgemäßes verpresster Zustand des Pressverbinders erreicht wird.

13. Verfahren nach einem der Ansprüche 10 bis 12,
bei dem beim Überschreiten eines vorbestimmten Grenzwerts für die auf den Pressverbinder (10) insgesamt ausgeübte Hubkraft das Ausgeben eines hydraulischen Drucks gehemmt oder verhindert wird.

## Claims

1. System for producing a tight connection of a press connector (10) to a workpiece (4), in particular to a pipe, preferably to a plastic pipe,
- with a pressing tool (8) for pressing a press connector (10) and
- with a pressure tool (12) for driving the pressing tool (8),
- wherein the pressure tool (12) is arranged to output a hydraulic pressure at a pressure generation location (16),
- wherein the pressing tool (8) is arranged to receive a hydraulic pressure at a pressing location (18) and to press a press connector (10) accordingly,
- wherein the pressure tool (12) and the pressing tool (8) are connected via a hydraulic pressure transmission connection (14) and
- wherein the pressure generation point (16) and the injection point (18) being remote from each other,
- wherein the pressing tool (8) comprises at least two opposing pressing sections (102, 114) with a variable distance to each other,
**characterized in**
- **that** the pressing toll (8) comprises a pretensioning element (88), and
- **that** the pressing tool (8) is arranged to take at least three states,
- wherein in a first state the pretensioning element (88) is tightened and the pressing sections (102, 114) are spaced apart,
- wherein, in a second state, the pressing sections (102, 114) are tightened by relaxing the pretensioning member (88) into engagement with a press connector (10), and
- wherein in a third state the press sections (102, 114) exert a lifting force towards each other on the press connector (10) and
**that**, in the second state, the press connector (10) is connected in a twist-proof manner to a workpiece (4) to be connected.

2. System according to claim 1,
**characterised in**
**that** the pressure transmission connection (14) is at least partially formed from a flexible material.

3. System according to claim 1 or 2,
**characterised in**
- **that** the pressure transmission connection (14) comprises a hydraulic hose and
- **that** the hydraulic hose is connected to the pressure tool (12) and to the pressing tool (8), in particular in each case via a flat-face connection (52, 70).

4. System according to any one of claims 1 to 3,
**characterised in**
- **that** the pressure tool (12) is designed as a hand tool with a press hand tool (24) and with a press force translator (22),
- wherein the pressing hand tool (24) is arranged to generate and transmit a lifting force at the pressing force translator (22) and
- wherein the pressing force translator (22) is arranged to translate a lifting force transmitted from the pressing hand tool (24) into a hydraulic pressure and to output it.

5. System according to any one of claims 1 to 4,
**characterised in**
**that** the pressing tool (8) is arranged to translate a pressure transmitted by the pressure transmission connection (14) into a lifting force, and to press a press connector (10) by exerting the lifting force.

6. System according to one of the claims 1 to 5,
**characterised in**
**that** the pressure tool (12) is arranged to switch off when a limit value for the variable distance between the pressing sections (102, 114) of the pressing tool (8) is reached.

7. Pressing tool for pressing a press connector (10), in particular for use in a system for producing a sealed connection with a workpiece (4), in particular with a pipe, preferably with a plastic pipe,
- with a housing (68),
- with a connecting element (72) for receiving a hydraulic pressure,
- with translation means (78) for translating a received hydraulic pressure into a lifting force and
- with at least two pressing sections (102, 114) for pressing a press connector (10) at a pressing location (18),
- wherein the connecting element (72) is arranged for connection to a pressure transmission connection (14) which is at least partially formed from flexible material, in particular is a flat-face connection (70)
**characterised in**
- **that** a pretensioning element (88) is provided for pretensioning the at least two pressing sections (102, 114), and
- **that** a pretensioning handle (122) is provided for pretensioning the pretensioning element (88),
- wherein, when the pretensioning element is pretensioned, the first pressing section is moved away from the second pressing section and, when the pretensioning element is released, the first pressing section is moved towards the second pressing section.

8. Press tool according to claim 7,
**characterised in**
**that** the at least two press sections (102, 114) are designed for lateral engagement with a press connector (10).

9. Press tool according to claim 7 or 8,
**characterised in**
- **that** the at least two pressing sections (102, 114) are designed to be movable relative to each other,
- whereby the relative movement is restricted by a certain minimum distance of the pressing sections (102, 114) from each other and
- wherein the minimum distance being determined as a function of a press connector (10) to be pressed.

10. Method for producing a tight connection of a press connector to a workpiece (4), in particular to a pipe made of a flexible material, preferably a plastic pipe,
- in which a hydraulic pressure is output at a pressure generation point (16),
- in which the hydraulic pressure is transmitted from the pressure generating location (16) to a pressing location (18) remote from the pressure generating location (16), and
- in which the hydraulic pressure is taken up at the pressing point (18) and a press connector (10) is pressed accordingly,
- in which, prior to the output of a hydraulic pressure
- a press connector (10) is inserted at an interface between two pipe ends,
- a pressing tool (8) is pre-tensioned and
- the pressing tool (8) is inserted and released at the press connector (10),
- wherein the press connector (10) is connected to a workpiece to be connected in a twist-proof manner by releasing the clamping force of the pressing tool (8).

11. Method according to claim 10,
- in which a first lifting force is generated at the pressure generation point (16) and is translated into a hydraulic pressure, and
- in which the hydraulic pressure is translated into a second lifting force at the pressing location (18) and the second lifting force is used to press a press connector (10),
- wherein the hydraulic pressure is transmitted from the pressure generation point (16) to the injection point (18) via a pressure transmission connection (14) made of flexible material.

12. The method of claim 10 or 11,
in which the procedural steps
- outputting a hydraulic pressure at a pressure generating point (16) and
- transferring the hydraulic pressure from the pressure generation point (16) to a pressing point (18) remote from the pressure generation point (16) can be repeated several times until the press connector is in the intended pressed state.

13. Method according to any one of claims 10 to 12,
in which, when a predetermined limit value for the total lifting force exerted on the press connector (10) is exceeded, the output of a hydraulic pressure is inhibited or prevented.

## Revendications

1. Système destiné à la réalisation d'une liaison étanche d'un raccord à sertir (10) à une composante (4), en particulier à un tube, de préférence à un tube en matière synthétique,
- qui comprend un outil de sertissage (8) destiné au sertissage d'un raccord à sertir (10) ; et
- qui comprend un outil de compression (12) destiné à l'entraînement de l'outil de sertissage (8) ;
- dans lequel l'outil de compression (12) est conçu pour produire une pression hydraulique à un endroit de génération de pression (16) ;
- dans lequel l'outil de sertissage (8) est conçu pour capter une pression hydraulique à un endroit de sertissage (18) et pour sertir de manière correspondante un raccord à sertir (10) ; et
- dans lequel l'outil de compression (12) et l'outil de sertissage (8) sont reliés par l'intermédiaire d'une liaison de transmission de pression hydraulique (14) ;
- dans lequel l'endroit de génération de pression (16) et l'endroit de sertissage (18) sont disposés à distance l'un de l'autre ;
- dans lequel l'outil de sertissage (8) présente au moins deux portions de sertissage opposées (102, 114) avec une distance variable entre eux ; **caractérisé en ce que** l'outil de sertissage (8) présente un élément de mise en état de précontrainte (88) ;
- **en ce que** l'outil de sertissage (8) est conçu pour adopter au moins trois états ;
- dans lequel, dans un premier état, l'élément de mise en état de précontrainte (88) est mis en état de précontrainte et les portions de sertissage (102, 114) sont disposées à l'écart l'une de l'autre ;
- dans lequel, dans un deuxième état, les portions de sertissage (102, 114) sont resserrées, par l'intermédiaire de la détente de l'élément de mise en état de précontrainte (88), en prise avec un raccord à sertir (10) ; et
- dans lequel, dans un troisième état, les portions de sertissage (102, 114) exercent une force de levage dans la direction l'une de l'autre sur le raccord à sertir (10) ; et
- **en ce que**, dans le deuxième état, le raccord à sertir (10) est relié fixe en rotation à une composante (4) qui doit être liée.

2. Système selon la revendication 1,
**caractérisé**
**en ce que** la liaison de transmission de pression (14) est réalisée, au moins en partie, à partir d'un matériau déformable.

3. Système selon la revendication 1 ou 2,
**caractérisé**
- **en ce que** la liaison de transmission de pression (14) présente un flexible hydraulique ; et
- **en ce que** le flexible hydraulique est relié à l'outil de compression (12) et à l'outil de sertissage (8), en particulier, à chaque fois, par l'intermédiaire d'une liaison à face plate (52, 70).

4. Système selon l'une quelconque des revendications 1 à 3,
**caractérisé**
- **en ce que** l'outil de compression (12) est réalisé sous la forme d'un outil à main qui comprend un outil manuel de sertissage (24) et un convertisseur de force de sertissage (22) ;
- dans lequel l'outil manuel de sertissage (24) est conçu pour générer une force de levage et pour la transmettre au convertisseur de force de sertissage (22) ; et
- dans lequel le convertisseur de force de sertissage (22) est conçu pour convertir et pour produire une force de levage transmise à partir de l'outil manuel de sertissage (24) en une pression hydraulique.

5. Système selon l'une quelconque des revendications 1 à 4,
**caractérisé**
- **en ce que** l'outil de sertissage (8) est conçu pour convertir une pression transmise par la liaison de transmission de pression (14) en une force de levage, et pour sertir un raccord à sertir (10) par le fait d'exercer la force de levage.

6. Système selon l'une quelconque des revendications 1 à 5,
**caractérisé**
- **en ce que** l'outil de compression (12) est conçu pour se désactiver lorsqu'une valeur limite pour la distance variable des portions de sertissage (102, 114) de l'outil de sertissage (8) l'une par rapport à l'autre a été atteinte.

7. Outil de sertissage destiné au sertissage d'un raccord à sertir (10), en particulier pour une utilisation dans un système destiné à la réalisation d'une liaison étanche à une composante (4), en particulier à un tube, de préférence à un tube en matière synthétique,
- qui comprend un boîtier (68) ;
- qui comprend un élément de liaison (72) destiné à capter une pression hydraulique ;
- qui comprend des moyens de conversion (78) destinés à la conversion d'une pression hydraulique captée en une force de levage ; et
- qui comprend au moins deux portions de sertissage (102, 114) destinées au sertissage d'un raccord à sertir (10) à un endroit de sertissage (18) ;
- dans lequel l'élément de liaison (72) est conçu pour une liaison avec une liaison de transmission de pression (14) réalisée au moins en partie à partir d'un matériau déformable, en particulier une liaison à face plate (70) ; **caractérisé**
- **en ce que** l'on prévoit un élément de mise en prise de précontrainte (88) destiné à la mise en état de précontrainte desdites au moins deux portions de sertissage (102, 114) ; et
- **en ce que** l'on prévoit une mise en contact par précontrainte (122) destinée à la mise en état de précontrainte de l'élément de mise en état de précontrainte ;
- dans lequel, au cours de la mise en état de précontrainte de l'élément de mise en état de précontrainte, la première portion de sertissage se déplace en s'écartant de la deuxième portion de sertissage et, lors de la détente de l'élément de mise en état de précontrainte, dans la direction de la deuxième portion de sertissage.

8. Outil de sertissage selon la revendication 7,
**caractérisé**
- **en ce que** lesdites au moins deux portions de sertissage (102, 114) sont réalisées pour une mise en prise latérale avec un raccord à sertir (10).

9. Outil de sertissage selon la revendication 7 ou 8,
**caractérisé**
- **en ce que** lesdites au moins deux portions de sertissage (102, 114) sont réalisées pour être mobiles l'une par rapport à l'autre ;
- dans lequel le mouvement relatif est limité par une distance minimale déterminée des portions de sertissage (102, 114) l'une par rapport à l'autre ; et
- dans lequel la distance minimale est déterminée en fonction d'un raccord à sertir (10) qui doit être serti.

10. Procédé destiné à la réalisation d'une liaison étanche d'un raccord à sertir (10) à une composante (4), en particulier à un tube réalisé à partir d'un matériau déformable, de préférence à un tube en matière synthétique,
- dans lequel une pression hydraulique est produite à un endroit de génération de pression (16) ;
- dans lequel la pression hydraulique est transmise à partir de l'endroit de génération de pression (16) à un endroit de sertissage (18) situé à distance de l'endroit de génération de pression (16) ; et
- dans lequel la pression hydraulique est captée à l'endroit de sertissage (18) et un raccord à sertir (10) est serti de manière correspondante ;
- dans lequel, avant la production d'une pression hydraulique,
- un raccord à sertir (10) est inséré à une interface entre deux extrémités de tubes ;
- un outil de sertissage (8) est mis en état de précontrainte ; et
- l'outil de sertissage (8) est disposé contre le raccord à sertir (10) et est soumis à une détente ; et
- dans lequel, par l'intermédiaire de la détente de l'outil de sertissage (8), le raccord à sertir (10) est relié fixe en rotation à une composante qui doit être liée.

11. Procédé selon la revendication 10,
- dans lequel une première force de levage est générée à l'endroit de génération de pression (16) et est convertie en une pression hydraulique ; et
- dans lequel la pression hydraulique est convertie, à l'endroit de sertissage (18), en une deuxième force de levage, et la deuxième force de levage est mise en oeuvre pour le sertissage d'un raccord à sertir (10) ;
- dans lequel la pression hydraulique est transmise à partir de l'endroit de génération de pression (16) jusqu'à l'endroit de sertissage (18) par l'intermédiaire d'une liaison de transmission de pression (14) réalisée à partir d'un matériau déformable.

12. Procédé selon la revendication 10 ou 11
dans lequel on répète à plusieurs reprises les étapes opératoires, dans lesquelles :
- on produit une pression hydraulique à un endroit de génération de pression (16) ; et
- on transmet la pression hydraulique à partir de l'endroit de génération de pression (16) à un endroit de sertissage (18) qui est situé à distance de l'endroit de génération de pression (16),
- jusqu'à ce que l'on atteigne un état serti de manière conforme du raccord à sertir.

13. Procédé selon l'une quelconque des revendications 10 à 12,
dans lequel, lors du dépassement vers le haut d'une valeur limite prédéterminée pour la force de levage qui s'exerce de manière globale sur le raccord à sertir (10), on empêche ou on arrête la production d'une pression hydraulique.
